# EUROPEAN PATENT SPECIFICATION

(11) **EP 1 187 489 B1**
(45) Date of publication and mention of the grant of the patent: **29.08.2007**
(21) Application number: 01921837.9
(22) Date of filing: 13.04.2001
(51) Int. Cl.: H04N 7/24

(54) **DECODER AND DECODING METHOD, RECORDED MEDIUM, AND PROGRAM**
VERFAHREN ZUR KODIERUNG UND DEKODIERUNG, AUFZEICHNUNGSMEDIUM UND PROGRAMM
DECODEUR, PROCEDE DE DECODAGE, SUPPORT ENREGISTRE ET PROGRAMME

(30) Priority: 14.04.2000 JP 2000112951
(43) Date of publication of application: 13.03.2002
(73) Proprietor: Sony Corporation, Tokyo 141-0001 (JP)
(72) Inventor: Ueda, Mamoru, Shinagawa-ku, Tokyo 141-0001 (JP); Kanesaka, Koki c/o LSI Systems, Inc., Kawasaki-shi, Kanagawa 215-0034 (JP); Ohara, Takumi c/o LSI Systems, Inc., Kawasaki-shi, Kanagawa 215-0034 (JP); Yamamoto, Takeshi c/o LSI Systems, Inc., Kawasaki-shi, Kanagawa 215-0034 (JP); Mizuno, Kazuhiro c/o LSI Systems, Inc., Kawasaki-shi, Kanagawa 215-0034 (JP); Morita, Toshikazu c/o LSI Systems, Inc., Kawasaki-shi, Kanagawa 215-0034 (JP)
(74) Representative: Robinson, Nigel Alexander Julian
(86) International application number: PCT/JP2001/003204
(87) International publication number: WO 2001/080567

(56) References cited:
- EP-A- 0 720 372
- JP-A- 7 023 397
- JP-A- 8 070 457
- JP-A- 8 130 745
- JP-A- 8 205 142
- JP-A- 10 145 237
- JP-A- 10 257 436
- JP-A- 2000 030 047
- US-A- 5 379 070
- US-A- 5 532 744

## Description

### Technical Field

This invention relates to a decoding device, a decoding method and a recording medium, and particularly to a decoding device, a decoding method and a recording medium which enable realization of a video decoder conformable to 4:2:2P@HL capable of carrying out real-time operation on a practical circuit scale.

### Background Art

The MPEG2 (Moving Picture Coding Experts Group/Moving Picture Experts Group 2) video system is a high-efficiency coding system for video signals prescribed by the ISO/IEC (International Standards Organization/International Electrotechnical Commission) 13818-2 and the ITU-T (International Telecommunication Union-Telecommunication sector) recommendations H.262.

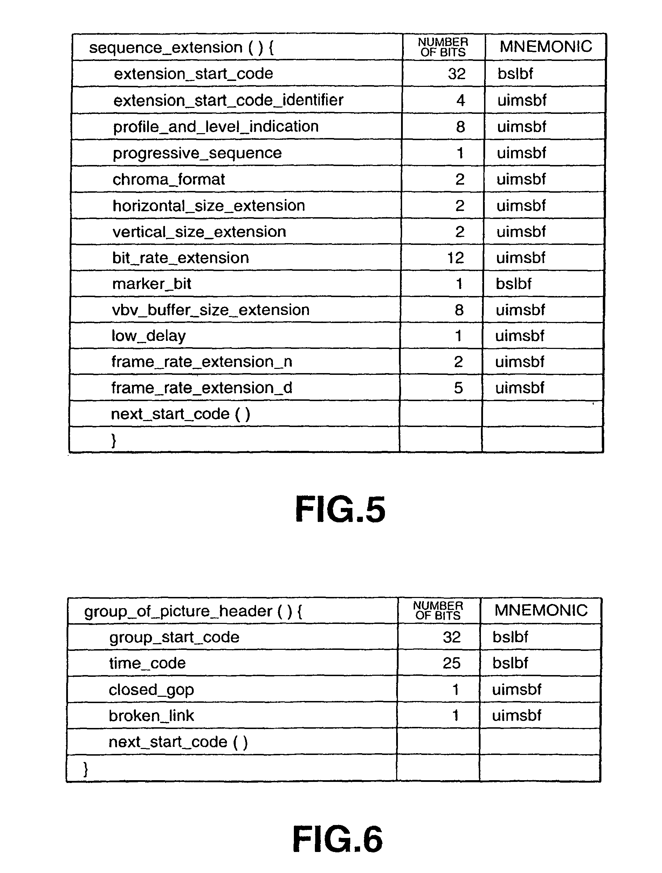

A coded stream of MPEG2 is classified by the profile determined in accordance with a coding technique and the level determined by the number of pixels to be handled, and is thus made conformable to a wide variety of applications. For example, MP@ML (Main Profile Main Level) is one of the classes, which is practically used for DVB (digital video broadcast) and DVD (digital versatile disk). The profile and the level are described in sequence_extension, which will be described later with reference to Fig. 5.

For production of video signals at a broadcasting station, 4:2:2P (4:2:2 Profile) is prescribed in which color-difference signals of video are handled in accordance with the 4:2:2 format similar to the conventional base band while an upper limit of the bit rate is increased. Moreover, HL (High Level) is prescribed to cope with high-resolution video signals of the next generation.

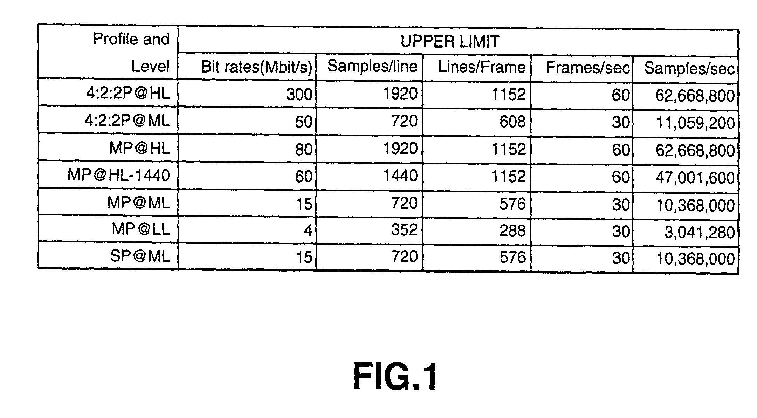

Fig.1 shows typical classes of MPEG2 and upper limit values of various parameters in the respective classes. In Fig.1, the bit rate, the number of samples per line, the number of lines per frame, the frame frequency, and the upper limit value of the sample processing time are shown with respect to 4:2:2P@HL (4:2:2 Profile High Level), 4:2:2P@ML (4:2:2 Profile Mail Level), MP@HL (Main Profile High Level), MP@HL-1440 (Main Profile High Level-1440), MP@ML (Main Profile Main Level), MP@LL (Main Profile Low Level) and SP@ML (Simple Profile Main Level).

Referring to Fig.1, the upper limit value of the bit rate for 4:2:2P@HL is 300 (Mbits/sec) and the upper limit value of the number of pixels to be processed is 62,668,800 (samples/sec). On the other hand, the upper limit value of the bit rate for MP@ML is 15 (Mbits/sec) and the upper limit value of the number of pixels to be processed is 10,368,000 (samples/sec). That is, it is understood that a video decoder for decoding 4:2:2P@HL video needs the processing ability that is 20 times for the bit rate and approximately six times for the number of pixels to be processed, in comparison with a video decoder for decoding MP@ML video.

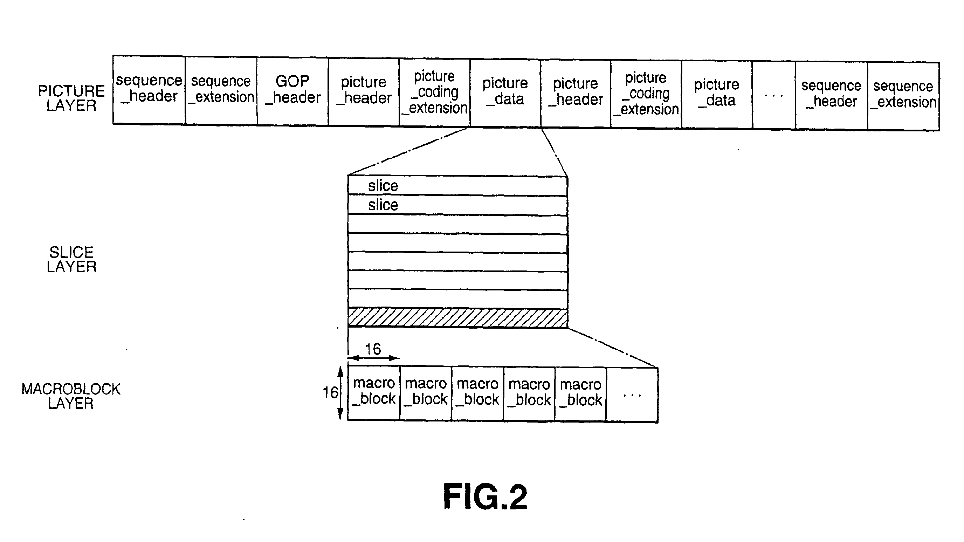

Fig.2 shows the level structure of an MPEG2 video bit stream.

At the beginning of a picture layer, which is the uppermost layer, sequence_header is described. Sequence_header defines header data of the MPEG bit stream sequence. If sequence_header at the beginning of the sequence is not followed by sequence_extension, the prescription of ISO/IEC 11172-2 is applied to this bit stream. If sequence_header at the beginning of the sequence is followed by sequence_extension, sequence_extension comes immediately after all sequence_headers that are generated subsequently. In the case of Fig.2, sequence_extension comes immediately after all sequence_headers.

Sequence_extension defines extension data of a sequence layer of the MPEG bit stream. Sequence_extension is generated only immediately after sequence_header and should not come immediately before sequence_end_code, which comes at the end of the bit stream, in order to prevent any frame loss after decoding and after frame reordering. If sequence_extension is generated in the bit stream, picture_coding_extension comes immediately after each picture_header

A plurality of pictures are included in GOP (group_of_picture). GOP_header defines header data of a GOP layer of the MPEG bit stream. In this bit stream, data elements defined by picture_header and picture_coding_extension are described. One picture is coded as picture_data, which follows picture_header and picture_coding_extension. The first coded frame following GOP_header is a coded I-frame. (That is, the first picture of GOP_header is an I-picture.) The ITU-T Recommendations H.262 defines various extensions in addition to sequence_extension and picture_coding_extension. These various extensions will not be shown or described here.

Picture_header defines header data of the picture layer of the MPEG bit stream, and picture_coding_extension defines extension data of the picture layer of the MPEG bit stream.

Picture_data describes data elements related to a slice layer and a macroblock layer of the MPEG bit stream. Picture_data is divided into a plurality of slices and each slice is divided into a plurality of macroblocks (macro_block), as shown in Fig.2

Macro_block is constituted by 16×16 pixel data. The first macroblock and the last macroblock of a slice are not skip macroblocks (macroblocks containing no data) A macroblock is constituted by 16×16 pixel data. Each block is constituted by 8×8 pixel data. In a frame picture for which frame DCT (discrete cosine transform) coding and field DCT coding can be used, the internal structure of a macroblock differs between frame coding and field coding.

A macroblock includes one section of a luminance component and a color-difference component. The term "macroblock" means any of an information source, decoded data, and a corresponding coded data component. A macroblock has three color-difference formats of 4:2:0, 4:2:2, and 4:4:4. The order of blocks in a macroblock differs depending on the color-difference format.

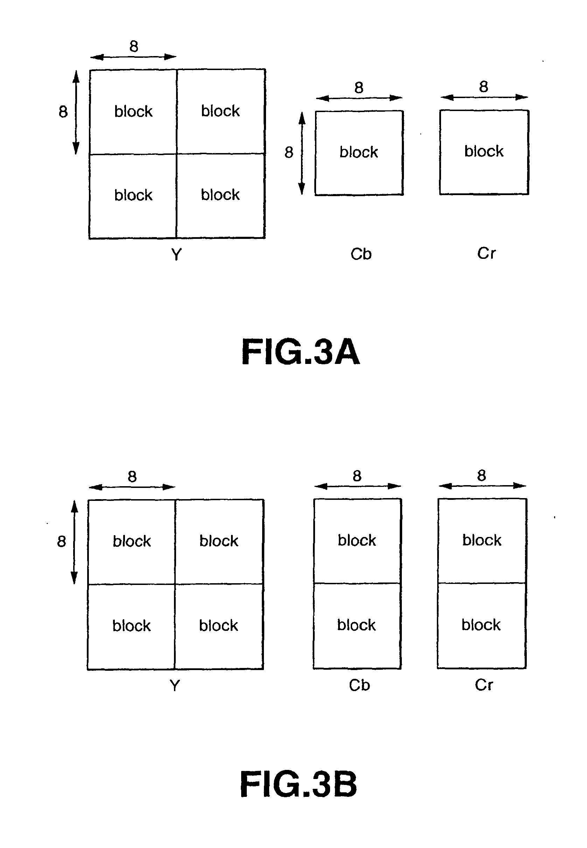

Fig.3A shows a macroblock in the case of the 4:2:0 format. In the 4:2:0 format, a macroblock is constituted by four luminance (Y) blocks and two color-difference (Cb, Cr) blocks (i.e., one block each). Fig.3B shows a macroblock in the case of the 4:2:2 format. In the 4:2:2 format, a macroblock is constituted by four luminance (Y) blocks and four color-difference (Cb, Cr) blocks (i.e., two blocks each).

For each macroblock, predictive coding processing is possible by several methods. The prediction mode is roughly divided into two types of field prediction and frame prediction. In field prediction, data of one or a plurality of fields which are previously decoded are used and prediction is carried out with respect to each field. In frame prediction, prediction of a frame is carried out by using one or a plurality of frames which are previously decoded. In a field picture, all the predictions are field predictions. On the other hand, in a frame picture, prediction can be carried out by field prediction or frame prediction, and the prediction method is selected for each macroblock. In the predictive coding processing of a macroblock, two types of special prediction modes, that is, 16×8 motion compensation and dual prime, can be used other than field prediction and frame prediction.

Motion vector information and other peripheral information are coded together with a prediction error signal of each macroblock. In coding the motion vector, the last motion vector coded by using a variable-length code is used as a prediction vector and a differential vector from the prediction vector is coded. The maximum length of a vector that can be displayed can be programmed for each picture. The calculation of an appropriate motion vector is carried out by a coder.

After picture_data, sequence_header and sequence_extension are arranged. The data elements described by sequence_header and sequence_extension are exactly the same as the data elements described by sequence_header and sequence_extension at the beginning of the video stream sequence. The purpose of describing the same data in the stream again is to avoid such a situation that if the bit stream receiving device starts reception at a halfway part of the data stream (for example, a bit stream part corresponding to the picture layer), the data of the sequence layer cannot be received and therefore the stream cannot be decoded.

After the data elements defined by the last sequence_header and sequence_extension, that is, at the end of the data stream, sequence_end_code of 32 bits indicating the end of the sequence is described.

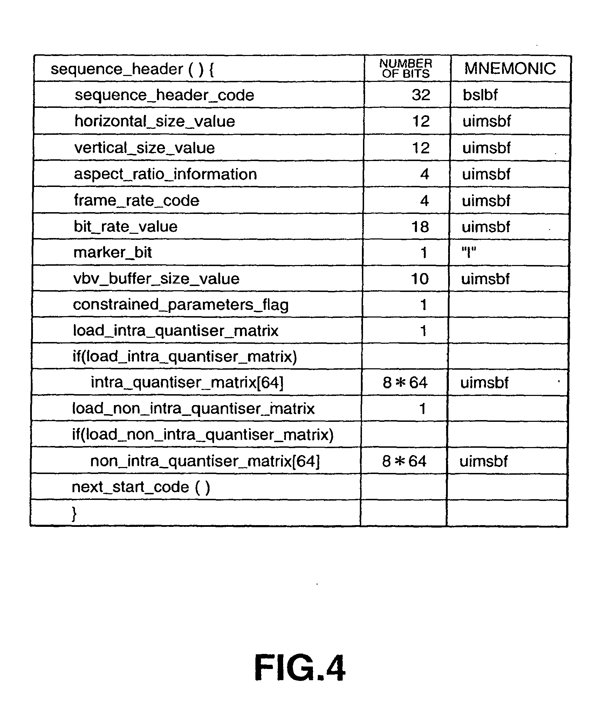

The respective data elements will now be described in detail with reference to Figs.4 to 12.

Fig.4 shows the data structure of sequence_header. The data elements included in sequence_header are sequence_header_code, horizontal_size_value, vertical_size_value, aspect_ratio_information, frame_rate_code, bit_rate_value, marker_bit, vbv_buffer_size_value, constrained_parameter_flag, load_intra_quantiser_matrix, intra_quantiser_matrix, load_non_intra_quantiser_matrix, and non_intra_quantiser_matrix.

Sequence_header_code is data expressing the start synchronizing code of the sequence layer. Horizontal_size_value is data of lower 12 bits expressing the number of pixels in the horizontal direction of the picture. Vertical_size_value is data of lower 12 bits expressing the number of vertical lines of the picture. Aspect_ratio_information is data expressing the aspect ratio of pixels or the aspect ratio of display screen. Frame_rate_code is data expressing the display cycle of the picture. Bit_rate_value is data of lower 18 bits expressing the bit rate for limiting the quantity of generated bits.

Marker_bit is bit data inserted to prevent start code emulation. Vbv_buffer_size_value is data of lower 10 bits expressing a value for determining the size of a virtual buffer VBV (video buffering verifier) for controlling the quantity of generated codes. Constrained_parameter_flag is data indicating that each parameter is within a limit. Load_non_intra_quantiser_matrix is data indicating the existence of non-intra MB quantization matrix data.

Load_intra_quantiser_matrix is data indicating the existence of intra MB quantization matrix data. Intra_quantiser_matrix is data indicating the value of the intra MB quantization matrix. Non_intra_quantiser_matrix is data indicating the value of the non-intra MB quantization matrix.

Fig.5 shows the data structure of sequence_extension. Sequence_extension includes data elements such as extension_start_code, extension_start_code_identifier, profile_and_level_indication, progressive_sequence, chroma_format, horizontal_size_extension, vertical_size_extension, bit_rate_extension, marker_bit, vbv_buffer_size_extension, low_delay, frame_rate_extension_n, and frame_rate_extension_d.

Extension_start_code is data expressing the start synchronizing code of the extension data. Extension_start_code_identifier is data expressing which extension data is to be sent. Profile_and_level_indication is data for designating the profile and level of the video data. Progressive_sequence is data indicating that the video data is sequentially scanned (progressive picture). Chroma_format is data for designating the color-difference format of the video data. Horizontal_size_extension is data of upper two bits added to horizontal_size value of the sequence header. Vertical_size_extension is data of upper two bits added to vertical_size_value of the sequence header.

Bit_rate_extension is data of upper 12 bits added to bit_rate_value of the sequence header. Marker_bit is bit data inserted to prevent start code emulation. Vbv_buffer_size_extension is data of upper eight bits added to vbv_buufer_size_value of the sequence header. Low_delay is data indicating that no B-picture is contained. Frame_rate_extension_n is data for obtaining the frame rate in combination with frame_rate_code of the sequence header. Frame_rate_extension_d is data for obtaining the frame rate in combination with frame_rate_code of the sequence header

Fig.6 shows the data structure of GOP_header. The data elements constituting GOP_header include group_start_code, time_code, closed_gop, and broken_linkz

Group_start_code is data indicating the start synchronizing code of the GOP layer. Time_code is a time code indicating the time of the leading picture of the GOP. Closed_gop is flag data indicating that the pictures within the GOP can be reproduced independently of other GOPs. Broken_link is flag data indicating that the leading B-picture in the GOP cannot be accurately reproduced for editing or the like.

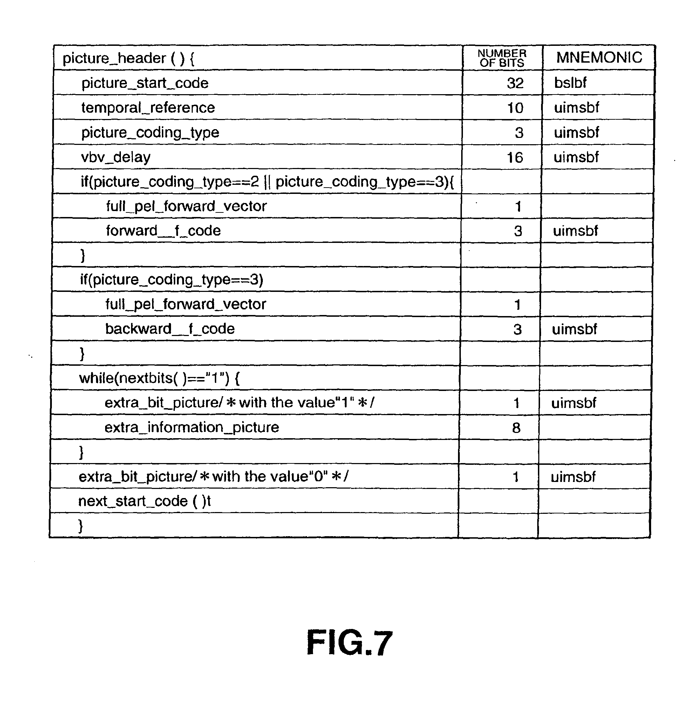

Fig.7 shows the data structure of picture_header. The data elements related to picture_header include picture_start_code, temporal_reference, picture_coding_type, vbv_delay, full_pel_forward_vector, forward_f_code, full_pel backward_vector, and backward_f_code

Picture_start_code is data expressing the start synchronizing code of the picture layer. Temporal_reference is data of the number indicating the display order of the pictures and reset at the leading part of the GOP. Picture_coding_type is data indicating the picture type. Vbv_delay is data indicating the initial state of a virtual buffer at the time of random access. Full_pel_forward_vector, forward_f_code, full_pel_backward_vector, and backward_f_code are fixed data which are not used in MPEG2.

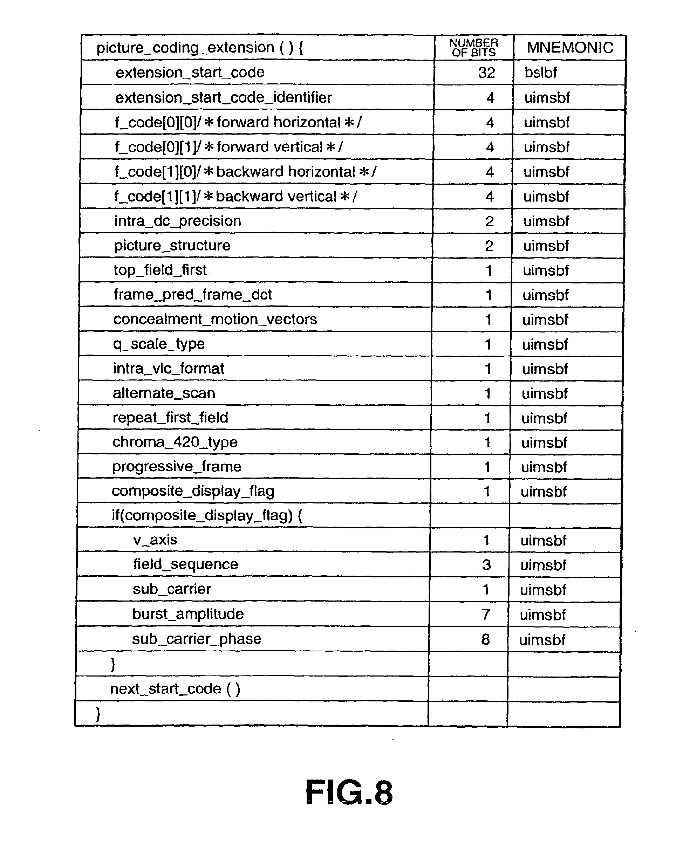

Fig.8 shows the data structure of picture_coding_extension. Picture_coding_extension includes data elements such as extension_start_code, extension_start_code_identifier, f_code[0][0], f_code[0][1], f_code[1][0], f_code[1][1], intra_dc_precision, picture_structure, top_field_first, frame_pred_frame_dct, concealment_motion_vectors, q_scale_type, intra_vlc_format, alternate_scan, repeat_first_field, chroma_420_type, progressive_frame, composite_display_flag, v_axis, field_sequence, sub_carrier, burst_amplitude, and sub_carrier_phase. Extension_start_code is the start code indicating the start of the extension data of the picture layer. Extension_start_code_identifier is a code indicating which extension data is to be sent. F_code[0][0] is data expressing the horizontal motion vector search range in the forward direction. F_code[0][1] is data expressing the vertical motion vector search range in the forward direction. F_code[1][0] is data expressing the horizontal motion vector search range in the backward direction. F_code[1][1] is data expressing the vertical motion vector search range in the backward direction.

Intra_dc_precision is data expressing the precision of a DC coefficient. By performing DCT on the matrix f representing the luminance and color-difference signals of the respective pixels in the block, a 8×8 DCT coefficient matrix F is obtained. The coefficient at the upper left corner of the matrix F is referred to as DC coefficient. The DC coefficient is a signal indicating the average luminance and the average color difference within the block. Picture_structure is data indicating whether the picture structure is a frame structure or a filed structure. In the case of the field structure, the data of picture_structure also indicates whether it is an upper filed or a lower field. Top_field_first is data indicating whether the first field is an upper field or a lower field in the case of the frame structure. Frame_pred_frame_dct is data indicating that prediction of frame mode DCT is only for the frame mode in the case of the frame structure. Concealment_motion_vectors is data indicating that a motion vector for concealing a transmission error is attached to an intra macroblock.

Q_scale_type is data indicating whether to use a linear quantization scale or a nonlinear quantization scale. Intra_vlc_format is data indicating whether or not to use another two-dimensional VLC (variable length coding) for the intra macroblock. Alternate_scan is data indicating the selection as to whether zig-zag scan or alternate scan is to be used. Repeat_first_field is data used in 2:3 pull-down. Chroma_420_type is data showing the same value as the subsequent progressive_frame in the case of a 4:2:0 signal format, or otherwise showing 0. Progressive_frame is data indicating whether the picture is sequentially scanned or is an interlaced field. Composite_display_flag is data indicating whether the source signal is a composite signal or not. V_axis, field_sequence, sub_carrier, burst_amplitude, and sub_carrier_phase are data used when the source signal is a composite signal.

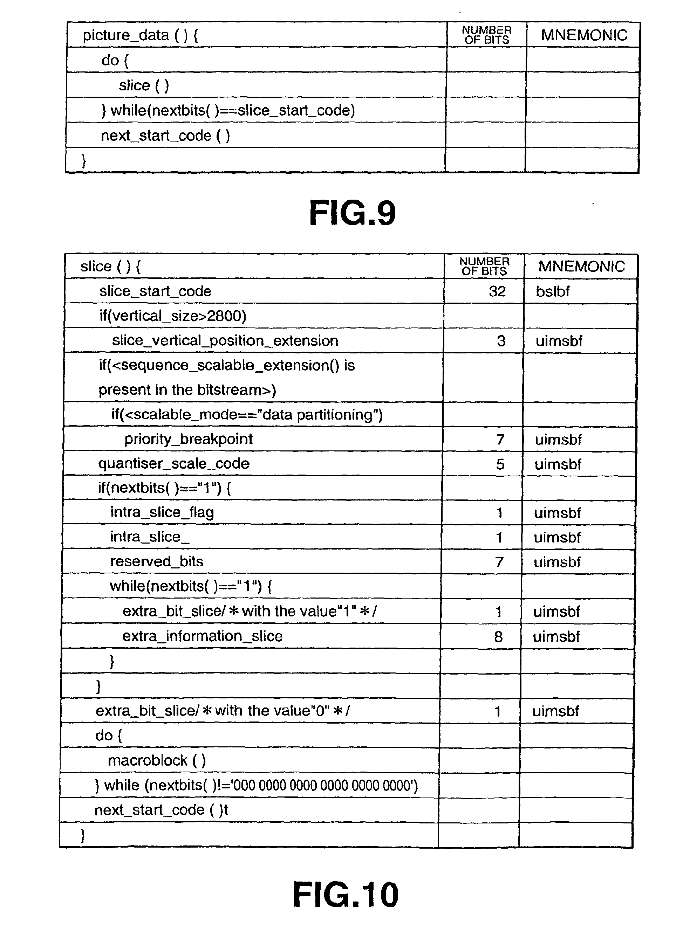

Fig.9 shows the data structure of picture_data. The data elements defined by the picture_data() function are data elements defined by the slice() function. At least one data element defined by the slice() function is described in the bit stream.

The slice() function is defined by data elements such as slice_start_code, quantiser_scale_code, intra_slice_flag, intra_slice, reserved_bits, extra_bit_slice, and extra_information_slice, and the macroblock() function, as shown in Fig.10.

Slice_start_code is the start code indicating the start of the data elements defined by the slice() function. Quantiser_scale_code is data indicating the quantization step size set for macroblocks existing on the slice layer. When quantiser_scale_code is set for each macroblock, the data of macroblock_quantiser_scale_code set for each macroblock is preferentially used.

Intra_slice_flag is a flag indicating whether or not intra_slice and reserved_bits exist in the bit stream. Intra_slice is data indicating whether or not a non-intra macroblock exists in the slice layer. When one of the macroblocks in the slice layer is a non-intra macroblock, intra_slice has a value "0". When all the macroblocks in the slice layer are non-intra macroblocks, intra_slice has a value "1". Reserved_bits is data of seven bits having a value "0". Extra_bit_slice is a flag indicating the existence of additional information. When followed by extra_information_slice, extra_bit_slice is set at "1". When there is no additional information, extra_bit_slice is set at "0".

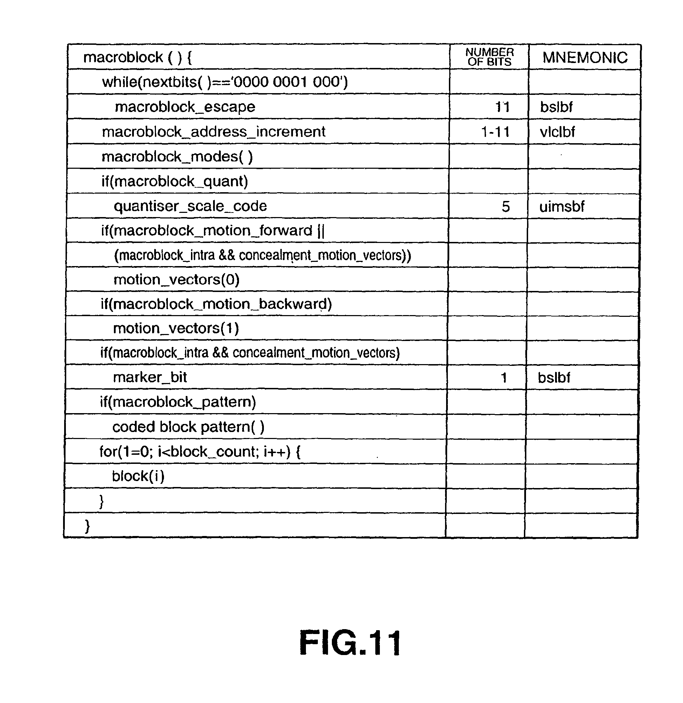

Next to these data elements, data elements defined by the macroblock() function are described. The macroblock() function is a function for describing data elements such as macroblock_escape, macroblock_address_increment, quantiser_scale_code, and marker_bit, and data elements defined by the macroblock_modes() function, the motion_vectors() function and the coded_block_pattern()function, as shown in Fig.11

Macroblock_escape is a fixed bit string indicating whether the horizontal difference between a reference macroblock and the preceding macroblock is not less than 34 or less than 34. When the horizontal difference between the reference macroblock and the preceding macroblock is not less than 34, 33 is added to the value of macroblock_address_increment. Macroblock_address_increment is data indicating the horizontal difference between the reference macroblock and the preceding macroblock. If one macroblock_escape exists before macroblock_address_increment, the value obtained by adding 33 to the value of macroblock_address_increment is the data indicating the actual horizontal difference between the reference macroblock and the preceding macroblock.

Quantiser_scale_code is data indicating the quantization step size set for each macroblock, and exists only when macroblock_quant is "1". For each slice layer, slice_quantiser_scale_code indicating the quantization step size of the slice layer is set. However, when scale_code is set for the reference macroblock, this quantization step size is selected.

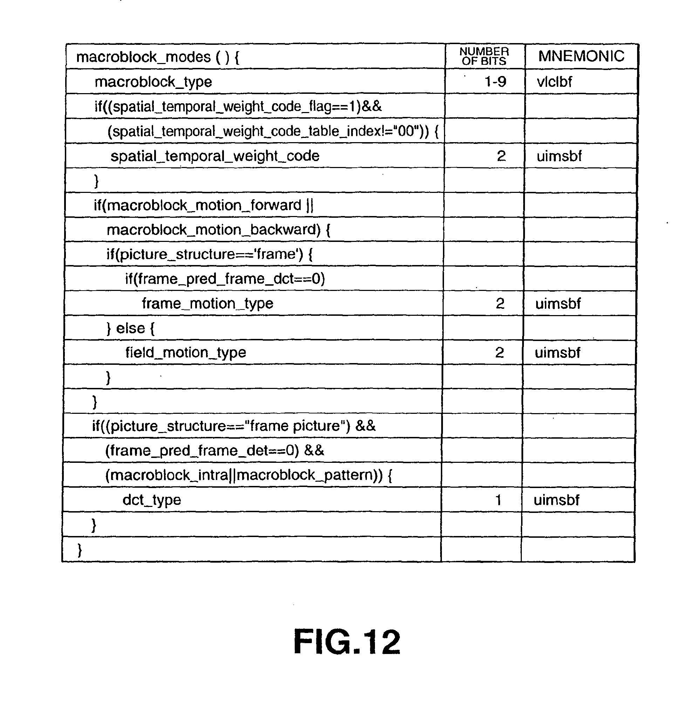

Next to macroblock_address_increment, data elements described by the macroblock _modes() function are described. As shown in Fig.12, the macroblock_modes() function is a function for describing data elements such as macroblock_type, frame_motion_type, field_motion_type, and dct_type. Macroblock_type is data indicating the coding type of the macroblocks.

When macroblock_motion_forward or macroblock_motion_backward is "1", the picture structure is a frame structure, and frame_pred_frame_dct is "0", a data element expressing frame_motion_type is described next to the data element expressing macroblock_type. This frame_pred_frame_dct is a flag indicating whether or not frame_motion_type exists in the bit stream.

Frame_motion_type is a two-bit code indicating the prediction type of the macroblocks in the frame. For a field-based prediction type having two prediction vectors, frame_motion_type is "00". For a field-based prediction type having one prediction vector, frame_motion_type is "01". For a frame-based prediction type having one prediction vector, frame_motion_type is "10". For a dual-prime prediction type having one prediction vector, frame_motion_type is "11"

Field_motion_type is a two-bit code indicating the motion prediction of the macroblocks in the field. For a field-based prediction type having one prediction vector, field_motion_type is "01". For an 18×8 macroblock-based prediction type having two prediction vectors, field_motion_type is "10". For a dual-prime prediction type having one prediction vector, field_motion_type is "11".

When the picture structure is a frame structure, frame_pred_frame_dct indicates that frame_motion_type exists in the bit stream, and frame_pred_frame_dct indicates that dct_type exist in the bit stream, a data element expressing dct_type is described next to the data element expressing macroblock_type. Dct_type is data indicating whether DCT is of a frame DCT mode or a field DCT mode.

In the MPEG2 stream, the data elements described above are started by special bit patterns which are called start codes. In other circumstances, these start codes are specified bit patterns which do not appear in the bit stream. Each start code is constituted by a start code prefix and a start code value subsequent thereto. The start code prefix is a bit string "0000 0000 0000 0000 0000 0001". The start code value is an eight-bit integer which identifies the type of the start code.

Fig.13 shows the value of each start code of MPEG2. Many start codes are represented by one start code value. However, slice_start_code is represented by a plurality of start code values 01 to AF. These start code values express the vertical position with respect to the slice. All these start codes are adjusted to be byte-based by inserting a plurality of bits "0" before the start code prefix so that the first bit of the start code prefix becomes the first bit of the byte.

Fig.14 is a block diagram showing the circuit structure of an MPEG video decoder conformable to the conventional MP@ML.

The MPEG video.decoder includes the following constituent elements: an IC (integrated circuit) 1 constituted by a stream input circuit 11, a buffer control circuit 12, a clock generating circuit 13, a start code detecting circuit 14, a decoder 15, a motion compensation circuit 16 and a display output circuit 17; and a buffer 2 constituted by a stream buffer 21 and a video buffer 22 and made up of, for example, a DRAM (dynamic random access memory).

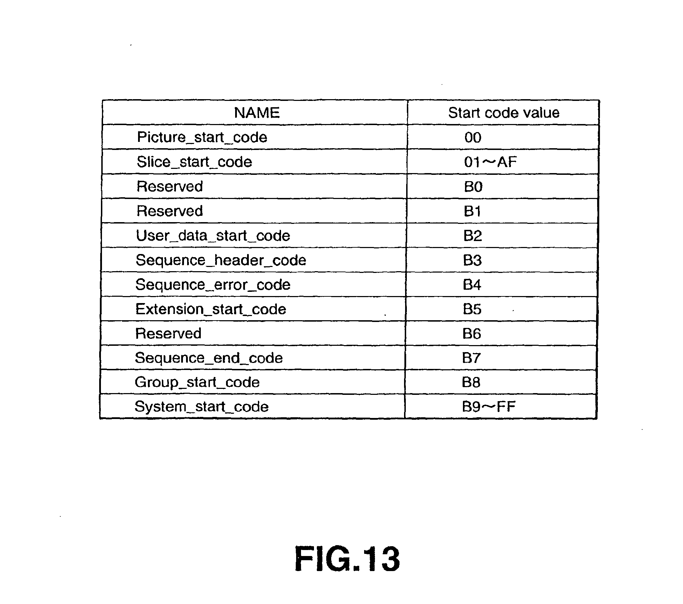

The stream input circuit 11 of the IC 1 receives an input of a high-efficiency coded stream and supplies the coded stream to the buffer control circuit 12.Then buffer control circuit 12 inputs the inputted coded stream to the stream buffer 21 of the buffer 2 in accordance with a basic clock supplied from the clock generating circuit 13. The stream buffer 21 has a capacity of 1,835,008 bits, which is a VBV buffer size required for MP@ML decoding. The coded stream saved in the stream buffer 21 is read out sequentially from the first written data under the control of the buffer control circuit 12 and is supplied to the start code detecting circuit 14. The start code detecting circuit 14 detects a start code as described with reference to Fig.13 from the inputted stream and outputs the detected start code and the inputted stream to the decoder 15.

The decoder 15 decodes the inputted stream on the basis of the MPEG syntax. First, the decoder 15 decodes a header parameter of a picture layer in accordance with the inputted start code, then divides a slice layer into macroblocks on the basis of the decoded header parameter, then decodes the macroblocks, and outputs resultant prediction vector and pixels to the motion compensation circuit 16.

In accordance with MPEG, the coding efficiency is improved by obtaining the motion-compensated difference between adjacent pictures using the temporal redundancy of pictures. In the MPEG video decoder, with respect to pixels using motion compensation, pixel data of a reference picture indicated by the motion vector of a currently decoded pixel is added to that pixel so as to carry out motion compensation and decode the data to the picture data prior to coding

If the macroblocks outputted from the decoder 15 are not using motion compensation, the motion compensation circuit 16 writes the pixel data to the video buffer 22 of the buffer 2 via the buffer control circuit 12, thus preparing for display output and also preparing for the case where the pixel data is used as reference data for another picture.

If the macroblocks outputted from the decoder 15 are using motion compensation, the motion compensation circuit 16 reads out reference pixel data from the video buffer 22 of the buffer 2 via the buffer control circuit 12 in accordance with a prediction vector outputted from the decoder 15. Then, the motion compensation circuit 16 adds the read-out reference pixel data to the pixel data supplied from the decoder 15 and thus carries out motion compensation. The motion compensation circuit 16 writes the motion-compensated pixel data to the video buffer 22 of the buffer 2 via the buffer control circuit 12, thus preparing for display output and also preparing for the case where the pixel data is used as reference data for another picture.

The display output circuit 17 generates a synchronous timing signal for outputting decoded picture data, then reads out the pixel data from the video buffer 22 via the buffer control circuit 12 on the basis of this timing, and outputs a decoded video signal.

As is described above, the MPEG2 stream has a hierarchical structure. The data quantity of the data of sequence_header to picture_coding_extension of the picture layer, described with reference to Fig.2, is not changed very much even if the profile and level described with reference to Fig.1 are varied. On the other hand, the data quantities of the data of the slice layer and subsequent layers depend on the number of pixels to be coded.

With reference to Fig.1, the number of macroblocks to be processed in one picture in HL is approximately six times that in ML. Moreover, with reference to Fig.3B, the number of blocks to be processed in one macroblock in the 4:2:2P fonnat is 4/3 times that in MP.

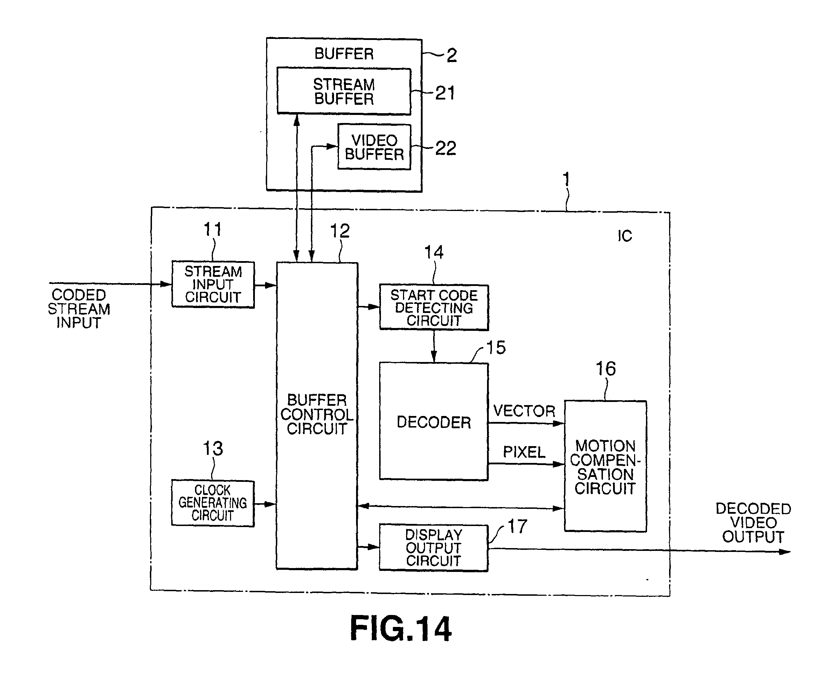

That is, if a coded stream of 4:2:2P@HL is to be decoded by the video decoder conformable to MP@ML described with reference to Fig.14, the buffer size of the stream buffer 21 becomes insufficient because of the increase in the VBV buffer size and the number of pixels. Moreover, the control by the buffer control circuit 12 cannot catch up with the increase in the number of accesses of the input stream to the stream buffer 21 due to the increase in the bit rate, and the increase in the number of accesses to the video buffer 22 by the motion compensation circuit 16 due to the increase in the number of pixels. Furthermore, the processing by the decoder 15 cannot catch up with the increase in the bit rate and the increase in the number of macroblocks and blocks.

The recent progress in the semiconductor technology has significantly improved the operating speed of both signal processing circuits and memory (buffer) circuits. However, in the current MP@ML decoding technique, decoding of 4:2:2P@HL has not been achieved yet. Generally, such high-speed signal processing largely increases the circuit scale, leading to the increase in the number of component parts and thy increase in power consumption

US 5,532,744 discloses techniques for decoding a hierarchy coded digital video bit stream using a number of individual decoder modules, connected in parallel. Prior to decoding, a bit stream is initially analysed and the slices are allocated amongst the decoder modules. A slice parser allocates slices to each decoder module. The separate data streams from each of the decoder modules are then provided to a frame buffer.

US 5,557,332 discloses a technique for digital video signal decoding using parallel processing. Frames of the video signal are divided into slices made up of a sequence of macro blocks. A demultiplexer allocates predetermined slices to a code buffer associated with a decoder circuit. The number of macro blocks in each slice is fixed so that it will not be necessary for any of the decoders to wait, as a result decoding carried on by the decoders is synchronized. In this way, each decoder respectively outputs simultaneously the blocks of the slices provided thereto.

### Disclosure of the Invention

In view of the foregoing status of the art, it is an object of the present invention to enable realization of a video decoder conformable to 4:2:2P@HL which can operate in real time with a practical circuit scale by using the recent semiconductor technology.

A decoding device according to the present invention is claimed in claim 1.

The decoding device may further comprise first buffer means for buffering the coded stream, reading means for reading out a start code indicating the start of a predetermined information unit included in the coded stream from the coded stream and reading out position information related to the position where the start code is held to the first buffer means, second buffer means for buffering the start code and the position information read out by the reading means, and buffering control means for controlling the buffering of the coded stream by the first buffer means and the buffering of the start code and the position information by the second buffer means.

The coded stream may be an MPEG2 coded stream prescribed by the ISO/IEC 13818-2 and the ITU-T Recommendations H.262.

The decoding device may further comprise selecting means for selecting of the start code and the position information by the second holding means, selecting means for selecting predetermined picture data of the plurality of picture data decoded and outputted by the plurality of decoding means, motion compensation means for receiving the input of the picture data selected by the selecting means and performing motion compensation if necessary, third holding means for holding the picture data selected by the selecting means or the picture data on which motion compensation is performed by the motion compensation means, and second holding control means for controlling the holding, by the third holding means, of the picture data selected by the selecting means or the picture data on which motion compensation is performed by the motion compensation means, independently of the first holding control means

A decoding method according to the present invention is claimed in claim 18.

A program recorded in a recording medium according to the present invention is claimed in claim 22.

A program according to the present invention is claimed in claim 21.

In the decoding device, decoding method and program, a coded stream is decoded and the decoding processing is controlled to be carried out in parallel.

In embodiments a coded stream is decoded by a plurality of slice decoders and the decoding processing by the plurality of slice decoders is carried out in parallel.

In embodiments a source coded stream is decoded for each slice constituting a picture of the source coded stream. The decoding statuses of the plurality of slice decoders are monitored and the plurality of slice decoders are controlled. The slices are allocated to the plurality of slice decoders so as to realize the fastest decoding processing carried out by the slice decoders irrespective of the order of the slices included in the picture.

In embodiments source coded stream is decoded for each slice constituting a picture of the source coded stream. The decoding statuses of the plurality of slice decoders are monitored and the plurality of slice decoders are controlled. The slice to be decoded is allocated to the slice decoder which ended decoding, of the plurality of slice decoders, irrespective of the order of the slice included in the picture.

### Brief Description of the Drawings

Fig. 1 illustrates upper limit values of parameters based on the profile and level in MPEG2.
Fig.2 illustrates the hierarchical structure of an MPEG2 bit stream.
Figs.3A and 3B illustrate a macroblock layer.
Fig.4 illustrates the data structure of sequence_header.
Fig.5 illustrates the data structure of sequence_extension.
Fig.6 illustrates the data structure of GOP_header.
Fig.7 illustrates the data structure of picture_header
Fig. 8 illustrates the data structure of picture_coding_extension.
Fig.9 illustrates the data structure of picture_data.
Fig.10 illustrates the data structure of a slice.
Fig.11 illustrates the data structure of a macroblock
Fig.12 illustrates the data structure of macroblock_modes.
Fig.13 illustrates start codes.
Fig.14 is a block diagram showing the structure of a video decoder for decoding a coded stream of conventional MP@ML

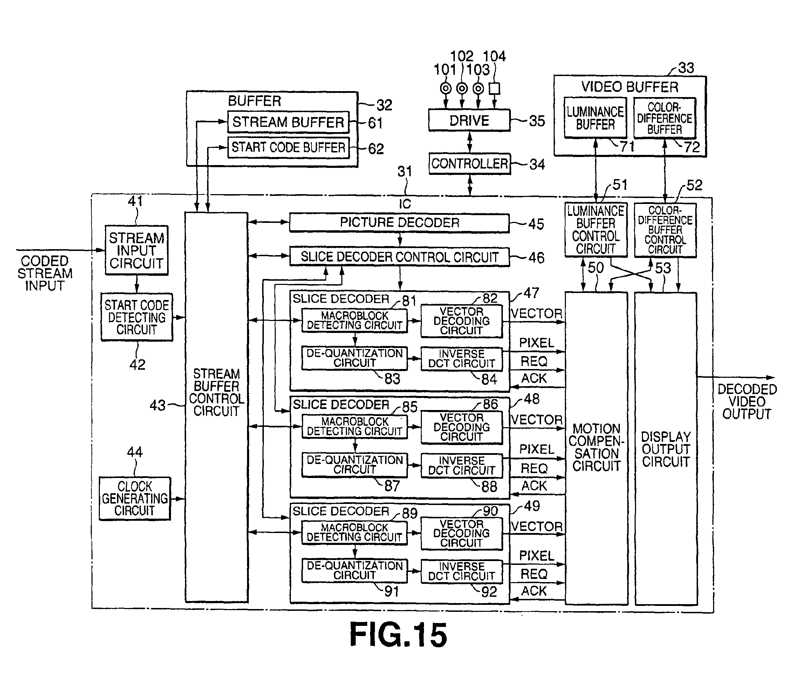

Fig.15 is a block diagram showing the structure of a video decoder according to the present invention.

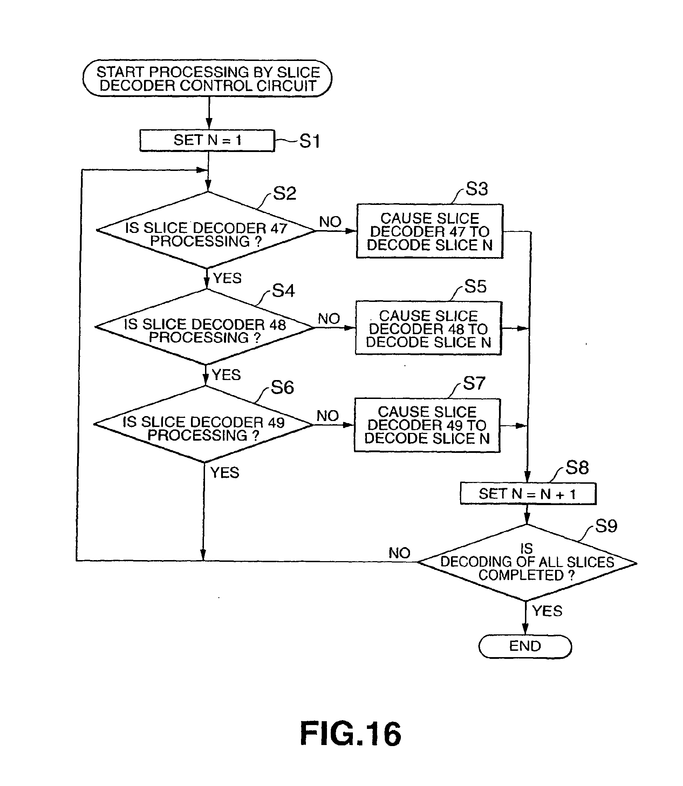

Fig.16 is a flowchart for explaining the processing by a slice decoder control circuit.

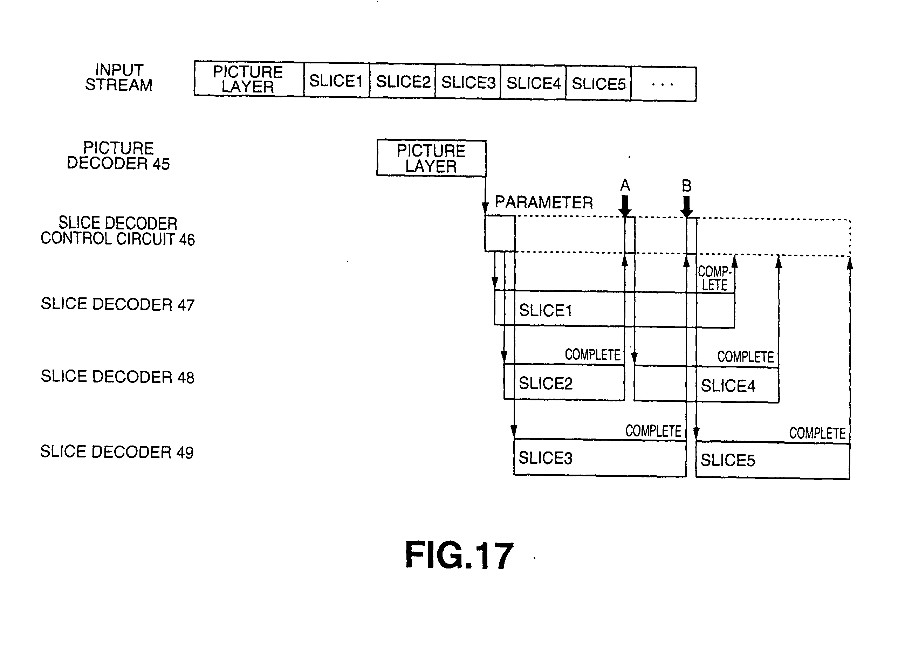

Fig. 17 illustrates a specific example of the processing by a slice decoder control circuit.

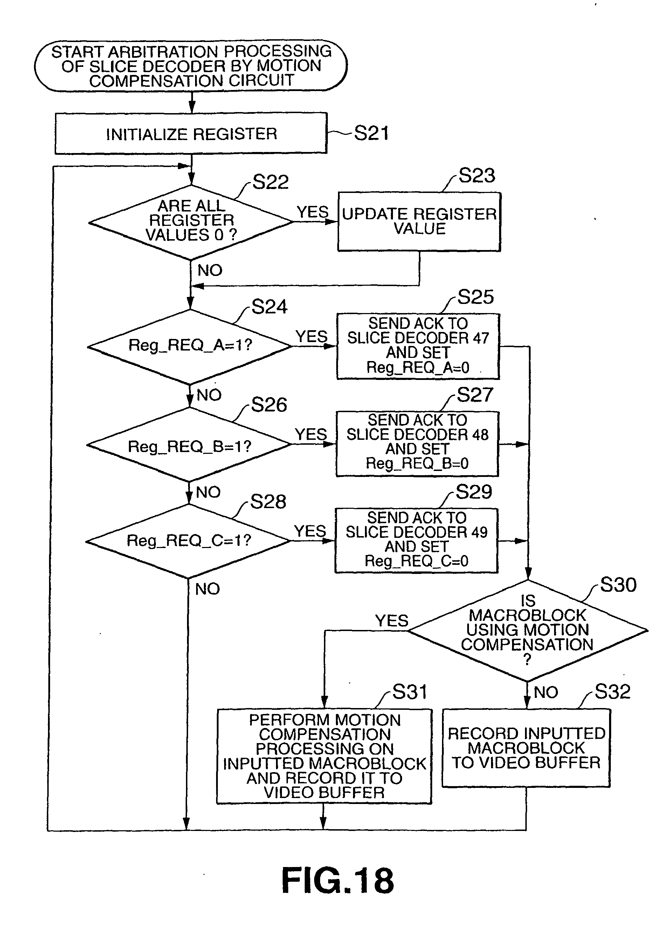

Fig.18 is a flowchart for explaining the arbitration processing of slice decoders by a motion compensation circuit.

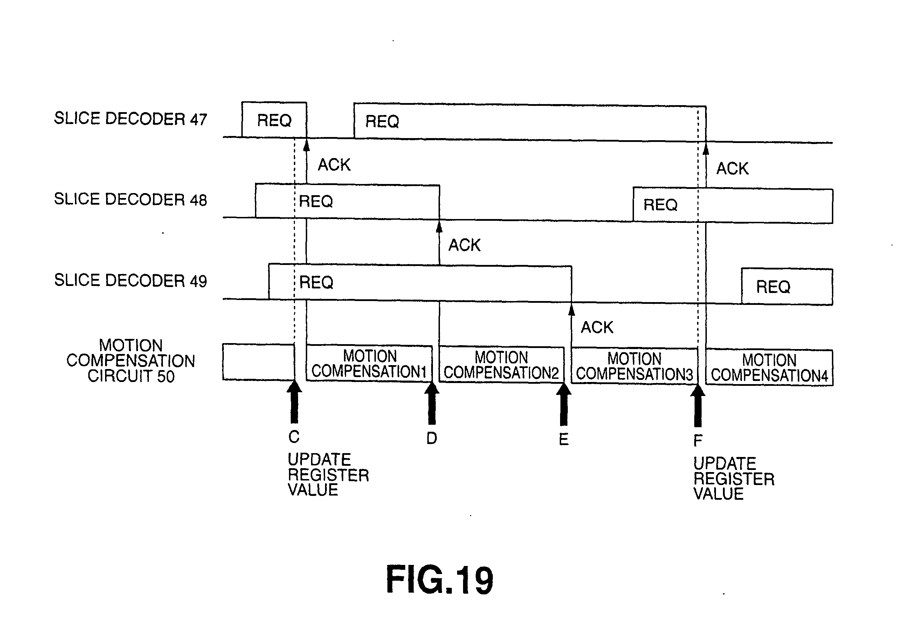

Fig.19 illustrates a specific example of the arbitration processing of slice decoders by a motion compensation circuit.

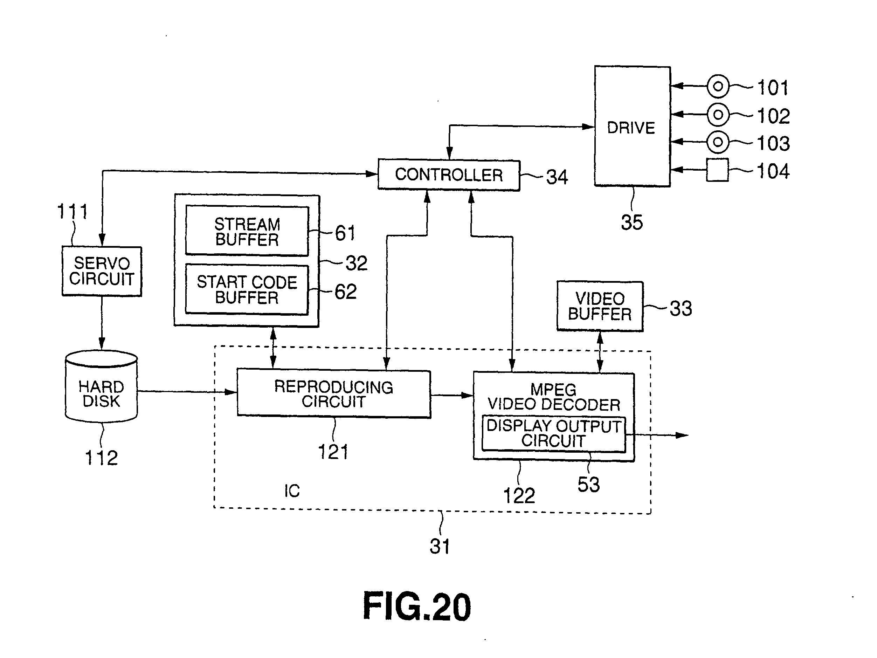

Fig.20 is a block diagram showing the structure of a reproducing device having the MPEG video decoder of Fig.15.

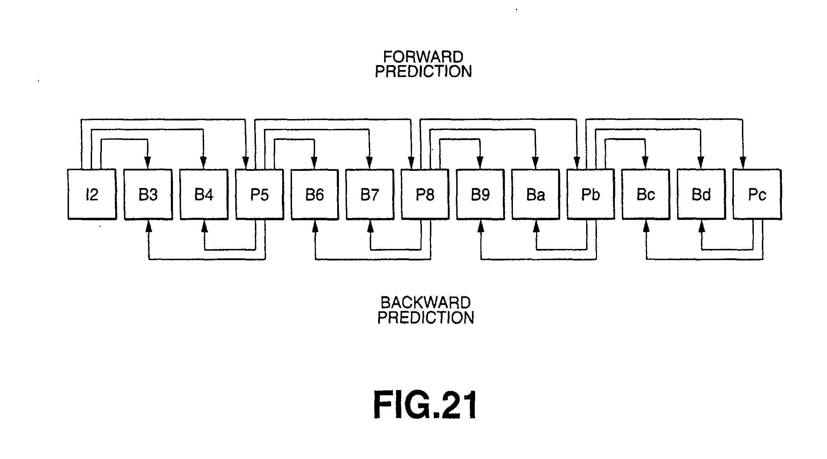

Fig.21 shows the picture structure of an MPEG video signal inputted to an encoder and then coded.

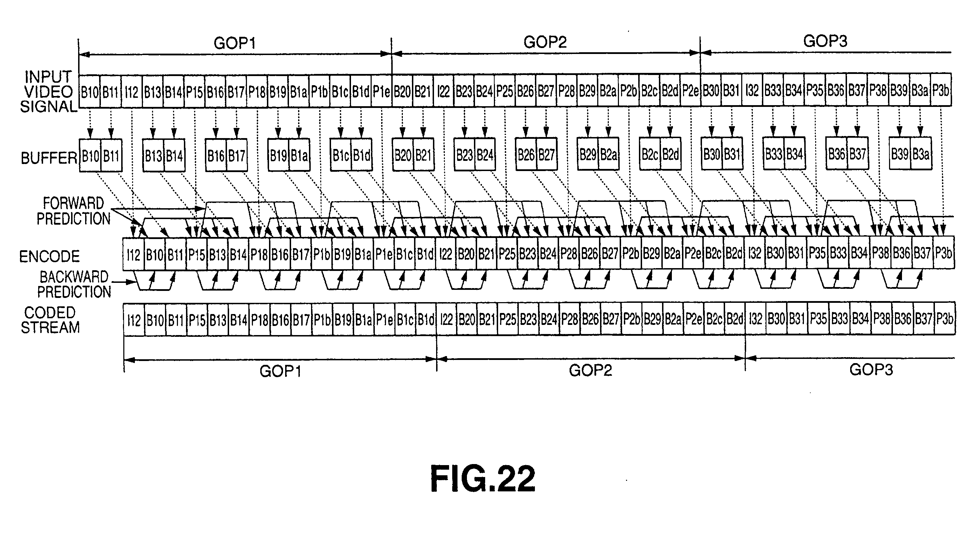

Fig.22 shows an example of MPEG picture coding using interframe prediction.

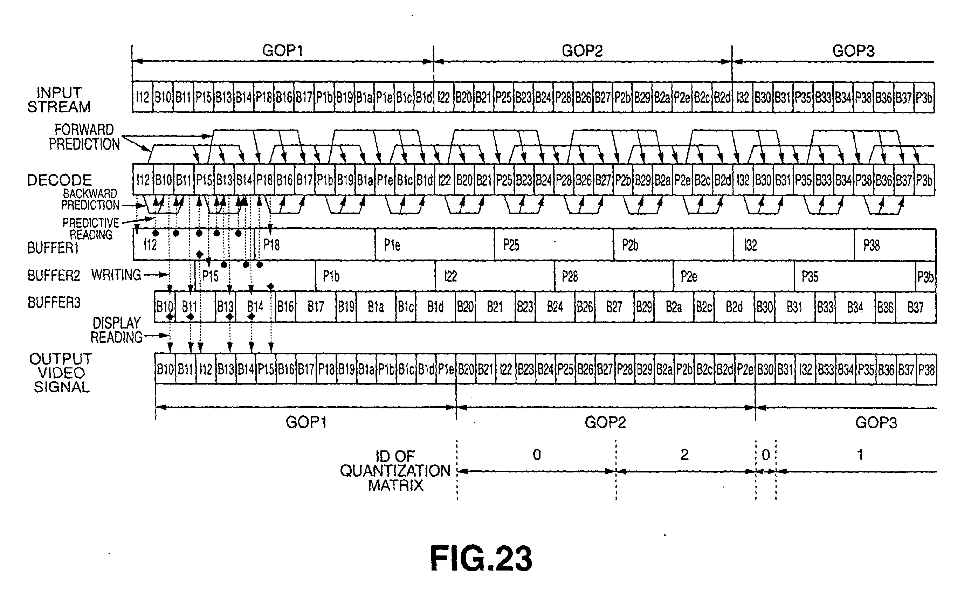

Fig.23 illustrates the decoding processing in the case where an MPEG coded stream is reproduced in the forward direction.

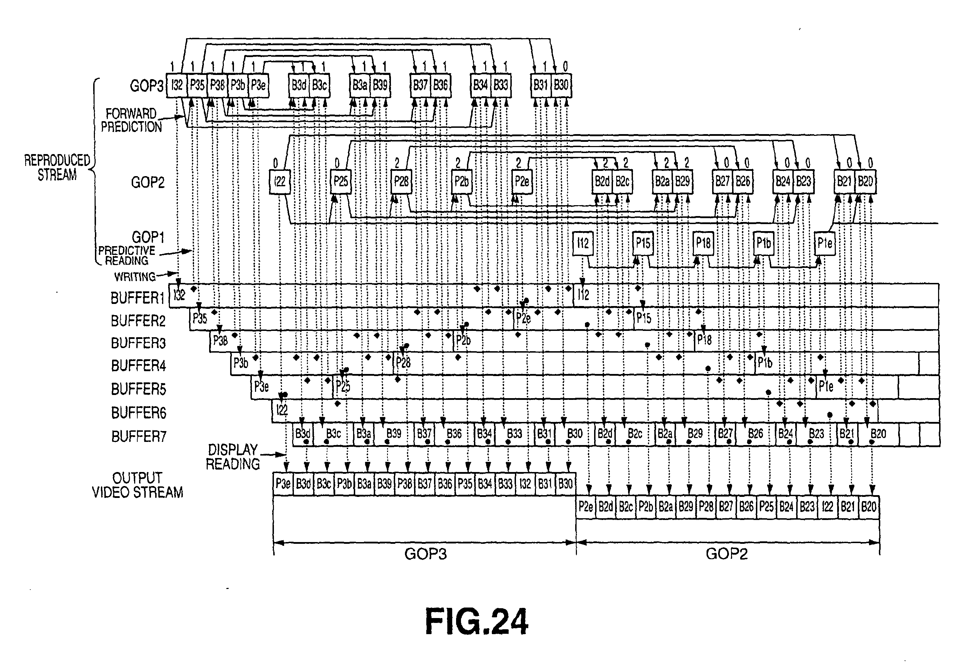

Fig.24 illustrates the decoding processing in the case where an MPEG coded stream is reproduced in the reverse direction.

### Best Mode for Carrying Out the Invention

A preferred embodiment of the present invention will now be described with reference to the drawings.

Fig. 15 is a block diagram showing the circuit structure of an MPEG video decoder according to the present invention.

The MPEG video decoder of Fig.15 includes the following constituent elements: an IC 31 constituted by a stream input circuit 41, a start code detecting circuit 42, a stream buffer control circuit 43, a clock generating circuit 44, a picture decoder 45, a slice decoder control circuit 46, slice decoders 47 to 49, a motion compensation circuit 50, a luminance buffer control circuit 51, a color-difference buffer control circuit 52, and a display output circuit 53; a buffer 32 constituted by a stream buffer 61 and a start code buffer 62 and made up of, for example, a DRAM; a video buffer 33 constituted by a luminance buffer 71 and a color-difference buffer 72 and made up of, for example, a DRAM; a controller 34; and a drive 35.

The stream input circuit 41 receives the input of a high-efficiency coded stream and supplied the coded stream to the start code detecting circuit 42. The start code detecting circuit 42 supplies the inputted coded stream to the stream buffer control circuit 43. The start code detecting circuit 42 also detects a start code as described with reference to Fig.13, then generates start code information including the type of the start code and a write pointer indicating the position where the start code is written to the stream buffer 61 on the basis of the detected start code, and supplies the start code information to the stream buffer control circuit 43.

The clock generating circuit 44 generates a basic clock which is twice that of the clock generating circuit 13 described with reference to Fig.14, and supplies the basic clock to the stream buffer control circuit 43. The stream buffer control circuit 43 writes the inputted coded stream to the stream buffer 61 of the buffer 32 and writes the inputted start code information to the start code buffer 62 of the buffer 32 in accordance with the basic clock supplied from the clock generating circuit 44.

In the case where the MPEG video decoder can reproduce an MPEG coded stream of 4:2:2P@HL in the forward direction, the stream buffer 61 has at least a capacity of 47,185,920 bits, which is a VBV buffer size required for decoding 4:2:2P@HL. In the case where the MPEG video decoder can carry out reverse reproduction, the stream buffer 61 has at least a capacity for recording data of two GOPs.

The picture decoder 45 reads out the start code information from the start code buffer 62 via the stream buffer control circuit 43. For example; when decoding is started, since it starts at sequence_header described with reference to Fig.2, the picture decoder 45 reads out a write pointer corresponding to sequence_header_code, which is the start code described with reference to Fig.4, from the start code buffer 62, and reads out and decodes sequence_header from the stream buffer 61 on the basis of the write pointer. Subsequently, the picture decoder 45 reads out and decodes sequence_extension, GOP_header, picture_coding_extension and the like from the stream buffer 61, similarly to the reading of sequence_header

At the point when the picture decoder 45 reads out the first slice_start_code from the start code buffer 62, all the necessary parameters for decoding the picture are provided. The picture decoder 45 the parameters of the decoded picture layer to the slice decoder control circuit 46.

The slice decoder control circuit 46 receives the input of the parameters of the picture layer, and reads out the start code information of the corresponding slice from the start code buffer 62 via the stream buffer control circuit 43. The slice decoder control circuit 46 also has a register indicating the ordinal number of a slice included in the coded stream which is to be decoded by one of the slice decoders 47 to 49, and supplies the parameters of the picture layer and the write pointer of the slice included in the start code information to one of the slice decoders 47 to 49. The processing in which the slice decoder control circuit 46 selects a slice decoder to carry out decoding from the slice decoders 47 to 49 will be described later with reference to Figs. 16 and 17.

The slice decoder 47 is constituted by a macroblock detecting circuit 81, a vector decoding circuit 82, a de-quantization circuit 83, and an inverse DCT circuit 84. The slice decoder 47 reads out the corresponding slice from the stream buffer 61 via the stream buffer control circuit 43 on the basis of the write pointer of the slice inputted from the slice decoder control circuit 46. Then, the slice decoder 47 decodes the read-out slice in accordance with the parameters of the picture layer inputted from the slice decoder control circuit 46 and outputs the decoded data to the motion compensation circuit 50.

The macroblock detecting circuit 81 separates macroblocks of the slice layer, decodes the parameter of each macroblock, supplies the variable-length coded prediction mode and prediction vector of each macroblock to the vector decoding circuit 82, and supplies variable-length coded coefficient data to the de-quantization circuit 83. The vector decoding circuit 82 decodes the variable-length coded prediction mode and prediction vector of each macroblock, thus restoring the prediction vector. The de-quantization circuit 83 decodes the variable-length coded coefficient data and supplies the decoded coefficient data to the inverse DCT circuit 84. The inverse DCT circuit 84 performs inverse DCT on the decoded coefficient data, thus restoring the original pixel data before coding.

The slice decoder 47 requests the motion compensation circuit 50 to carry out motion compensation on the decoded macroblock (that is, to set a signal denoted by REQ in Fig.15 at 1). The slice decoder 47 receives a signal indicating the acceptance of the request to carry out motion compensation (that is, a signal denoted by ACK in Fig.15) from the motion compensation circuit 50, and supplies the decoded prediction vector and the decoded pixel to the motion compensation circuit 50. After receiving the input of the ACK signal and supplying the decoded prediction vector and the decoded pixel to the motion compensation circuit 50, the slice decoder 47 changes the REQ signal from 1 to 0. Then, at the point when the decoding of the next inputted macroblock ends, the slice decoder 47 changes the REQ signal from 0 to 1.

Circuits from a macroblock detecting circuit 85 to an inverse DCT circuit 88 of the slice decoder 48 and circuits from a macroblock detecting circuit 89 to an inverse DCT circuit 92 of the slice decoder 49 carry out the processing similar to the processing carried out by the circuits from the macroblock detecting circuit 81 to the inverse DCT circuit 84 of the slice decoder 47 and therefore will not be described further in detail.

The motion compensation circuit 50 has three registers Reg_REQ_A, Reg_REQ_B, and Reg_REQ_C indicating whether motion compensation of the data inputted from the slice decoders 47 to 49 ended or not. The motion compensation circuit 50 properly selects one of the slice decoders 47 to 49 with reference to the values of these registers, then accepts a motion compensation execution request (that is, outputs an ACK signal to a REQ signal and receives the input of a prediction vector and a pixel), and carried out the motion compensation processing. In this case, after motion compensation for any of the slice decoders 47 to 49 which has a REQ signal of 1 at predetermined timing ends once for each of the slice decoders 47 to 49, the motion compensation circuit 50 accepts the next motion compensation request. For example, even if the slice decoder 47 consecutively issues motion compensation requests, the motion compensation circuit 50 cannot accept the second motion compensation request from the slice decoder 47 until motion compensation for the slice decoder 48 and the slice decoder 49 ends. The processing in which the motion compensation circuit 50 selects one of the slice decoder 47 to 49 to carry out motion compensation on the output of the selected slice decoder will be described later with reference to Figs. 18 and 19.

When the macroblock inputted from one of the slice decoders 47 to 49 is not using motion compensation, if the pixel data is luminance data, the motion compensation circuit 50 writes the pixel data to the luminance buffer 71 of the video buffer 33 via the luminance buffer control circuit 51, and if the pixel data is color-difference data, the motion compensation circuit 50 writes the pixel data to the color-difference buffer 72 of the video buffer 33 via the color-difference buffer control circuit 52. Thus, the motion compensation circuit 50 prepares for display output and also prepares for the case where the pixel data is used as reference data for another picture.

When the macroblock outputted from one of the slice decoders 47 tot 49 is using motion compensation, if the pixel data is luminance data, the motion compensation circuit 50 reads a reference pixel from the luminance buffer 71 via the luminance buffer control circuit 51 in accordance with the prediction vector inputted from the corresponding one of the slice decoders 47 to 49, and if the pixel data is color-difference data, the motion compensation circuit 50 reads reference pixel data from the color-difference buffer 72 via the color-difference buffer control circuit 52. Then, the motion compensation circuit 50 adds the read-out reference pixel data to the pixel data supplied from the corresponding one of the slice decoders 47 to 49, thus carrying out motion compensation

If the pixel data is luminance data, the motion compensation circuit 50 writes the pixel data on which motion compensation is performed, to the luminance buffer 71 via the luminance buffer control circuit 51. If the pixel data is color-difference data, the motion compensation circuit 50 writes the pixel data on which motion compensation is performed, to the color-difference buffer 72 via the color-difference buffer control circuit 52. Thus, the motion compensation circuit 50 prepares for display output and also prepares for the case where the pixel data is used as reference data for another picture.

The display output circuit 53 generates a synchronous timing signal for outputting the decoded picture data, then reads out the luminance data from the luminance buffer 71 via the luminance buffer control circuit 51, and reads out the color-difference data from the color-difference buffer 72 via the color-difference buffer control circuit 52 in accordance with the timing. The display output circuit 52 thus outputs the data as a decoded video signal.

The drive 35 is connected with the controller 34, and if necessary, the drive 35 carries out transmission and reception of data to and from a magnetic disk 101, an optical disc 102, a magneto-optical disc 103 and a semiconductor memory 104 which are loaded thereon. The controller 34 controls the operation of the above-described IC 31 and drive 35. For example, the controller 34 can cause the IC 31 to carry out processing in accordance with the programs recorded on the magnetic disk 101, the optical disc 102, the magneto-optical disc 103 and the semiconductor memory 104 loaded on the drive.

The processing by the slice decoder control circuit 46 will now be described with reference to the flowchart of Fig. 16.

At step S1, the slice decoder control circuit 46 sets the value of the register to N=1, which indicates the ordinal number of the slice to be processed in the coded stream. At step S2, the slice decoder control circuit 46 determines whether the slice decoder 47 is processing or not.

If it is determined at step S2 that the slice decoder 47 is not processing, the slice decoder control circuit 46 at step S3 supplies the parameter of the picture layer and the write pointer of the slice N included in the start code information to the slice decoder 47 and causes the slice decoder 47 to decode the slice N. The processing then goes to step S8.

If it is determined at step S2 that the slice decoder 47 is processing, the slice decoder control circuit 46 at step S4 determines whether the slice decoder 48 is processing or not. If it is determined at step S4 that the slice decoder 48 is not processing, the slice decoder control circuit 46 at step S5 supplies the parameter of the picture layer and the write pointer of the slice N included in the start code information to the slice decoder 48 and causes the slice decoder to decode the slice N. The processing then goes to step S8.

If it is determined at step S4 that the slice decoder 48 is processing, the slice decoder control circuit 46 at step S6 determines whether the slice decoder 49 is processing or not. If it is determined at step S6 that the slice decoder 49 is processing, the processing returns to step S2 and the subsequent processing is repeated

If it is determined at step S6 that the slice decoder 49 is not processing, the slice decoder control circuit 46 at step S7 supplies the parameter of the picture layer and the write pointer of the slice N included in the start code information to the slice decoder 49 and causes the slice decoder 49 to decode the slice N. The processing then goes to step S8.

At step S8, the slice decoder control circuit 46 sets the value of the register to N=N+1, which indicates the ordinal number of the slice to be processed in the coded stream. At step S9, the slice decoder control circuit 46 determines whether the decoding of all the slices ended or not. If it is determined at step S9 that the decoding of all the slices has not ended, the processing returns to step S2 and the subsequent processing is repeated. If it is determined at step S9 that the decoding of all the slices ended, the processing ends

Fig.17 shows a specific example of the processing by the slice decoder control circuit 46 described with reference to Fig.16. As described above, the data of the picture layer is decoded by the picture decoder 45 and the parameter of the picture layer is supplied to the slice decoder control circuit 46. In this case, at step S1 described with reference to Fig.16, the slice decoder control circuit 46 sets the value of the register to N=1. At step S2, it is determined that the slice decoder 47 is not processing. Therefore, at step S3, the slice decoder control circuit 46 supplies the parameter of the picture layer and the write pointer of a slice 1 included in the start code information to the slice decoder 47 and causes the slice decoder 47 to decode the slice N (where N=1). At step S8, the slice decoder control circuit 46 sets the value of the register to N=N+1. At step S9, it is determined that the decoding of all the slices has not ended. Therefore, the processing returns to step S2

At step S2, it is determined that the slice decoder 47 is processing. At step S4, it is determined that the slice decoder 48 is not processing. Therefore, at step S5, the slice decoder control circuit 46 supplies the parameter of the picture layer and the write pointer of a slice 2 to the slice decoder 48 and causes the slice decoder 48 to decode the slice N (where N=2). At step S8, the slice decoder control circuit 46 sets the value of the register to N=N+1. At step S9, it is determined that the decoding of all the slices has not ended: Therefore, the processing returns to step S2.

At step S2, it is determined that the slice decoder 47 is processing, and at step S4, it is determined that the slice decoder 48 is processing. At step S6, it is determined that the slice decoder 49 is not processing. Therefore, at step S7, the slice decoder control circuit 46 supplies the parameter of the picture layer and the write pointer of a slice 3 to the slice decoder 49 and causes the slice decoder 49 to decode the slice N (where N=3). At step S8, the slice decoder control circuit 46 sets the value of the register to N=N+1. At step S9, it is determined that the decoding of all the slices has not ended. Therefore, the processing returns to step S2.

After carrying out the decoding processing of the inputted slice, the slice decoders 47 to 49 outputs a signal indicating the completion of the decoding processing to the slice decoder control circuit 46. That is, until a signal indicating the completion of the decoding processing of the slice is inputted from one of the slice decoders 47 to 49, all the slice decoders 47 to 49 are processing and therefore the processing of steps S2, S4 and S6 is repeated. When the slice decoder 48 outputs a signal indicating the completion of the decoding processing to the slice decoder control circuit 46 at the timing indicated by A in Fig.17, it is determined at step S4 that the slice decoder 48 is not processing. Therefore, at step S5, the slice decoder control circuit 46 supplies the write pointer of a slice 4 to the slice decoder 48 and causes the slice decoder 48 to decode the slice N (where N=4). At step S8, the slice decoder control circuit 46 set the value of the register to N=N+1. At step S9, it is determined that the decoding of all the slices has not ended. Therefore, the processing returns to step S2.

The slice decoder control circuit 46 repeats the processing of steps S2, S4 and S6 until the next input of a signal indicating the completion of the decoding processing is received from one of the slice decoders 47 to 49. In Fig.17, since the slice decoder control circuit 46 receives the input of a signal indicating the end of the decoding the slice 3 from the slice decoder 49 at the timing indicated by B, it is determined at step S6 that the slice decoder 49 is not processing. At step S7, the slice decoder control circuit 46 supplies the write pointer of a slice 5 to the slice decoder 49 and causes the slice decoder 49 to decode the slice N (where N=5). At step S8, the slice decoder control circuit 46 sets the value of the register to N=N+1. At step S9, it is determined that the decoding of all the slices has not ended. Therefore, the processing returns to step S2: The similar processing is repeated until the decoding of the last slice ends.

Since the slice decoder control circuit 46 allocates the slices for the decoding processing with reference to the processing statuses of the slice decoders 47 to 49, the plurality of decoders can be efficiently used.

The arbitration processing of the slice decoders by the motion compensation circuit 50 will now be described with reference to the flowchart of Fig.18.

At step S21, the motion compensation circuit 50 initializes the internal registers Reg_REQ_A, Reg_REQ_B, and Reg_REQ_C. That is, it sets Reg_REQ_A=0, Reg_REQ_B=0, and Reg_REQ_C=0.

At step S22, the motion compensation circuit 50 determines whether all the register values are 0 or not. If it is determined at step S22 that all the register values are not 0 (that is, at least one register value is 1), the processing goes to step S24.

If it is determined at step S22 that all the register values are 0, the motion compensation circuit 50 at step S23 updates the register values on the basis of REQ signals inputted from the slice decoders 47 to 49. Specifically; when a REQ signal is outputted from the slice decoder 47, Reg_REQ_A=1 is set. When a REQ signal is outputted from the slice decoder 48, Reg_REQ_B=1 is set. When a REQ signal is outputted from the slice decoder 49, Reg_REQ_C=1 is set. The processing then goes to step S24.

At step S24, the motion compensation circuit 50 determines whether Reg_REQ_A is 1 or not. If it is determined at step S24 that Reg_REQ_A is 1, the motion compensation circuit 50 at step S25 transmits an ACK signal to the slice decoder 47 and sets Reg_REQ_A=0. The slice decoder 47 outputs the prediction vector decoded by the vector decoding circuit 82 and the pixel on which inverse DCT is performed by the inverse DCT circuit 84, to the motion compensation circuit 50. The processing then goes to step S30.

If it is determined at step S24 that Reg_REQ_A is not 1, the motion compensation circuit 50 at step S26 determines whether Reg_REQ_B is 1 or not. If it is determined at step S26 that Reg_REQ_B is 1, the motion compensation circuit 50 at step S27 transmits an ACK signal to the slice decoder 48 and sets Reg_REQ_B=0. The slice decoder 48 outputs the prediction vector decoded by the vector decoding circuit 86 and the pixel on which inverse DCT is performed by the inverse DCT circuit 88, to the motion compensation circuit 50. The processing then goes to step S30.

If it is determined at step S26 that Reg_REQ_B is not 1, the motion compensation circuit 50 at step S28 determines whether Reg_REQ_C is 1 or not. If it is determined at step S28 that Reg_REQ_C is not 1, the processing returns to step S22 and the subsequent processing is repeated.

If it is determined at step S28 that Reg_REQ_C is 1, the motion compensation circuit 50 at step S29 transmits an ACK signal to the slice decoder 49 and sets Reg_REQ_C=0. The slice decoder 49 outputs the prediction vector decoded by the vector decoding circuit 90 and the pixel on which inverse DCT is performed by the inverse DCT circuit 92, to the motion compensation circuit 50. The processing then goes to step S30.

At step S30, the motion compensation circuit 50 determines whether the macroblock inputted from one of the slice decoders 47 to 49 is using motion compensation or not.

If it is determined at step S30 that the macroblock is using motion compensation, the motion compensation circuit 50 at step S31 carries out motion compensation processing on the inputted macroblock. Specifically, in accordance with the prediction vector outputted from the corresponding one of the slice decoders 47 to 49, if the pixel data is luminance data, the motion compensation circuit 50 reads out a reference pixel from the luminance buffer 71 via the luminance buffer control circuit 51, and if the pixel data is color-difference data, the motion compensation circuit 50 reads out reference pixel data from the color-difference buffer 72 via the color-difference buffer control circuit 52. Then, the motion compensation circuit 50 adds the read-out reference pixel data to the pixel data supplied from the corresponding one of the slice decoders 47 to 49, thus carrying out motion compensation.

If the pixel data is luminance data, the motion compensation circuit 50 writes the motion-compensated pixel data to the luminance buffer 71 via the luminance buffer control circuit 51. If the pixel data is color-difference data, the motion compensation circuit 50 write the motion-compensated pixel data to the color-difference buffer 72 via the color-difference buffer control circuit 52. Thus, the motion compensation circuit 50 prepares for display output and also prepares for the case where the pixel data is used as reference data for another picture. The processing then returns to step S22 and the subsequent processing is repeated

If it is determined at step S30 that the macroblock is not using motion compensation, the motion compensation circuit 50 at step S32 writes the pixel data to the luminance buffer 71 via the luminance buffer control circuit 51 if the pixel data is luminance data, and writes the pixel data to the color-difference buffer 72 via the color-difference buffer control circuit 52 if the pixel data is color-difference data Thus, the motion compensation circuit 50 prepares for display output and also prepares for the case where the pixel data is used as reference data for another picture. The processing then returns to step S22 and the subsequent processing is repeated

Fig.19 shows a specific example of the arbitration processing of the decoders by the motion compensation circuit 50 described above with reference to Fig.18.

If it is determined that all the register values of the motion compensation circuit 50 are 0 by the processing of step S22 of Fig.18 at timing C shown in Fig.19, all the slice decoders 47 to 49 are outputting REQ signals. Therefore, the register values are updated to Reg_REQ_A=1, Reg_REQ_B=1, and Reg_REQ_C=1 by the processing of step S23. Since it is determined that Reg_REQ_A is 1 by the processing of step S24, the motion compensation circuit 50 at step S25 outputs an ACK signal to the slice decoder 47 and sets Reg_REQ_A=0. The motion compensation circuit 50 then receives the input of the prediction vector and the pixel from the slice decoder 47 and carries out motion compensation 1.

After the motion compensation 1 ends, that is, at timing D shown in Fig.19, the processing returns to step S22. At the timing D shown in Fig.19, a REG signal is being outputted from the slice decoder 47. However, since the register values are Reg_REQ_A=0, Reg_REQ_B= 1 and Reg_REQ_C=1 and it is determined at step S22 that all the register values are not 0, the processing goes to step S24 and the register values are not updated.

It is determined at step S24 that Reg_REQ_A is 0 and it is determined at step S26 that Reg_REQ_B is 1. Therefore, the motion compensation circuit 50 at step S27 outputs an ACK signal to the slice decoder 48 and sets Reg_REQ_B=0. The motion compensation circuit 50 then receives the input of the predictive vector and the pixel from the slice decoder 48 and carries out motion compensation 2

After the motion compensation 2 ends, that is, at timing E shown in Fig.19, the processing returns to step S22. At the timing E shown in Fig.19, a REG signal is being outputted from the slice decoder 47. However, since the register values are Reg_REQ_A=0, Reg_REQ_B=0 and Reg_REQ_C=1 and it is determined at step S22 that all the register values are not 0, the register values are not updated, similarly to the case of the timing D.

It is determined at step S24 that Reg_REQ_A is 0 and it is determined at step S26 that Reg_REQ_B is 0. It is determined at step S28 that Reg_REQ_C is 1. Therefore, the motion compensation circuit 50 at step S29 outputs an ACK signal to the slice decoder 49 and sets Reg_REQ_C=0. The motion compensation circuit 50 then receives the input of the predictive vector and the pixel from the slice decoder 49 and carries out motion compensation 3.

After the motion compensation 3 ends, that is, at timing F shown in Fig.19, the processing returns to step S22. At the timing F, since the register values are Reg_REQ_A=0, Reg_REQ_B=0 and Reg_REQ_C=0, the register values are updated to Reg_REQ_A=1, Reg_REQ_B=1 and Reg_REQ_C=0 at step S23

Then, it is determined at step S24 that Reg_REQ_A is 1 and motion compensation 4 is carried out by the similar processing.

By repeating such processing, the motion compensation circuit 50 carries out motion compensation while arbitrating among the slice decoders 47 to 49.

As described above, in the MPEG video decoder of Fig.15, since the start code buffer 62 is provided, the decoders from the picture decoder 45 to slice decoder 49 can access the stream buffer 61 without waiting for the end of operations of the other decoders. The slice decoders 47 to 49 can be caused to simultaneously operate by the processing at the slice decoder control circuit 46. Moreover, the motion compensation circuit 50 can properly select one slice decoder, access the luminance buffer 71 and the color-difference buffer 72 which are separate from each other, and carry out motion compensation. Therefore, in the MPEG video decoder of Fig.15, the decoding processing performance and the access performance to the buffers are improved, and the decoding processing of 4:2:2P@HL is made possible.

The frame buffering in the case where an MPEG stream inputted to the MPEG video decoder of Fig.15 is decoded and reproduced will now be described.

Fig.20 is a block diagram showing the structure of a reproducing device having the MPEG video decoder of Fig.15. Parts corresponding to those of Fig.15 are denoted by the same numerals and will not be described further in detail.

An MPEG coded stream is recorded on a hard disk 112. A servo circuit 111 drives the hard disk 112 under the control of the controller 34 and an MPEG stream read out by a data reading unit, not shown, is inputted to a reproducing circuit 121 of the IC 31.

The reproducing circuit 121 includes the circuits from the stream input circuit 4.1 to the clock generating circuit 44 described with reference to Fig.15. In forward reproduction, the reproducing circuit 121 outputs the MPEG stream in the inputted order as a reproduced stream to an MPEG video decoder 122. In reproduction in the reverse direction (reverse reproduction), the reproducing circuit 122 rearranges the inputted MPEG coded stream in an appropriate order for reverse reproduction by using the stream buffer 61 and then outputs the rearranged MPEG coded stream as a reproduced stream to the MPEG video decoder 122.

The MPEG video decoder 122 includes the circuits from the picture decoder 45 to the display output circuit 53 described with reference to Fig.15. By the processing at the motion compensation circuit 50, the MPEG video decoder 122 reads out a decoded frame stored in the video buffer 33 as a reference picture, if necessary, then carries out motion compensation, decodes each picture (frame) of the inputted reproduced stream in accordance with the above-described method, and stores each decoded picture in the video buffer 33. Moreover, by the processing at the display output circuit 53, the MPEG video decoder 122 sequentially reads out the frames stored in the video buffer 33 and outputs and displays the frames on .a display unit or display device, not shown.

In this example, the MPEG coded stream stored on the hard disk 112 is decoded, outputted and displayed. In the reproducing device or a recording/reproducing device having the MPEG video decoder of Fig.15, even with a different structure from that of Fig.20 (for example, a structure in which the MPEG video decoder 122 has the function to hold a coded stream similarly to the stream buffer 61 and the function to rearrange frames similarly to the reproducing circuit 121), an inputted MPEG coded stream is decoded and outputted by basically the same processing.

As a matter of course, various recording media other than the hard disk 112 such as an optical disc, a magnetic disk, a magneto-optical disc, a semiconductor memory, and a magnetic tape can be used as the storage medium for storing the coded stream.

The picture structure of an MPEG predictive coded picture will now be described with reference to Figs.21 and 22.

Fig.21 shows the picture structure of an MPEG video signal inputted to and coded by an encoder (coding device), not shown A frame 12 is an intra coded frame (I-picture), which is encoded without referring to another picture. Such a frame provides an access point of a coded sequence as a decoding start point but its compression rate is not very high.

Frames P5, P8, Pb and Pe are forward predictive coded frames (P-pictures), which are coded more efficiently than an I-picture by motion compensation prediction from a past I-picture or P-picture. P-pictures themselves, too, are used as reference pictures for prediction. Frames B3, B4, ..., Bd are bidirectional predictive coded frames. These frames are compressed more efficiently than I-picture and P-pictures but require bidirectional reference pictures of the past and the future. B-pictures are not used as reference pictures for prediction.

Fig.22 shows an example of coding an MPEG video signal (MPEG coded stream) using interframe prediction, carried out by an encoder, not shown, to generate the MPEG coded picture described with reference to Fig.21

An inputted video signal is divided into GOPs (groups of pictures), for example, each group consisting of 15 frames. The third frame from the beginning of each GOP is used as an I-picture, and subsequent frames appearing at intervals of two frames are used as P-pictures. The other frames are used as B-pictures (M=15, N=3). A frame B10 and a frame B11, which are B-pictures requiring backward prediction for coding, are temporarily saved in the buffer, and a frame I12, which is an I-picture, is coded first.

After the coding of the frame 112 ends, the frame B10 and the frame B11 temporarily saved in the buffer are coded using the frame I12 as a reference picture. A B-picture should be coded with reference to both past and future reference pictures. However, with respect to B-pictures having no pictures that can be referred for forward prediction, such as the frames B10 and B11, a closed GOP flag is set up and coding is carried out only by using backward prediction without using forward prediction.

A frame B13 and a frame B14, inputted while the coding of the frame B10 and the frame B11 is carried out, are stored in the video buffer. A frame P15, which is inputted next to the frames B13 and B14, is coded with reference to the frame I12 as a forward prediction picture. The frame B13 and the frame B14 read out from the video buffer are coded with reference to the frame I12 as a forward prediction picture and with reference to the frame P15 as a backward prediction picture.

Then, a frame B16 and a frame B17 are stored in the video buffer. Similarly, a P-picture is coded with reference to a previously coded I-picture or P-picture as a forward prediction picture, and a B-picture is temporarily stored in the video buffer and then coded with reference to a previously coded I-picture or P-picture as a forward prediction picture or backward prediction picture.

In this manner, picture data coded over a plurality of GOPs to generate a coded stream. On the hard disk 112 of Fig.20, an MPEG coded stream coded by the above-described method is recorded.

When an ordinary picture is DCT-transformed, a DCT coefficient matrix obtained by DCT transform at the time of coding has such a characteristic that it has a large value for a low-frequency component and a small value for a high-frequency component. Compression of information by utilizing this characteristic is quantization (each DCT coefficient is divided by a certain quantization unit and the decimal places are rounded out). The quantization unit is set as an 8×8 quantization table, and a small value for a low-frequency component and a large value for a high-frequency component are set. As a result of quantization, the components of the matrix become almost 0, except for an upper left component. The quantization ID corresponding to the quantization matrix is added to the compressed data and thus sent to the decoder side. That is, the MPEG video decoder 122 of Fig.20 decodes the MPEG coded stream with reference to the quantization matrix from the quantization ID.

Referring to Fig.23, the processing in which a coded stream including GOPs from GOP1 to GOP3 is inputted to the reproducing circuit 121 and decoded by the MPEG video decoder 122 in the case of reproducing video data in the forward direction from the hard disk 112 will now be described. Fig.23 shows an example of MPEG decoding using interframe prediction.

An MPEG video stream inputted to the reproducing circuit 121 from the hard disk 112 for forward reproduction is outputted to the MPEG video decoder 122 as a reproduced stream of the same picture arrangement as the inputted order by the processing at the reproducing circuit 121. At the MPEG video decoder 122, the reproduced stream is decoded in accordance with the procedure described with reference to Figs.15 to 19 and then stored in the video buffer 33.

The first inputted frame I12 is an I-picture and therefore requires no reference picture for decoding. The buffer area in the video buffer 33 in which the frame I12 decoded by the MPEG video decoder 122 is stored is referred to as buffer 1.

The next frames B10 and B11 inputted to the MPEG video decoder 122 are B-pictures. However, since a Closed GOP flag is set up, these frames B10 and B11 are decoded with reference to the frame I12 stored in the buffer 1 of the video buffer 33 as a backward reference picture and then stored in the video buffer 33. The buffer area in which the decoded frame B10 is stored is referred to as buffer 3.

By the processing at the display output circuit 53, the frame B10 is read out from the buffer 3 of the video buffer 33 and is outputted to and displayed on the display unit, not shown. The next decoded frame B1 is stored in the buffer 3 of the video buffer 33 (that is, rewritten in the buffer 3), then read out, and outputted to and displayed on the display unit, not shown.

After that, the frame I12 is read out from the buffer 1 and is outputted to and displayed on the display unit, not shown. At this timing, the next frame P15 is decoded with reference to the frame I12 stored in the buffer 1 of the video buffer 33 as a reference picture and then stored in a buffer 2 of the video buffer 33. If no Closed GOP flag is set up for the frame B10 and the frame B11, the frame B10 and the frame B11 are not decoded because there is no picture that can be used as a forward reference picture. In such a case, the frame I12 is first outputted from the display output circuit 53 and displayed.

The next inputted frame B13 is decoded with reference to the frame I12 stored in the buffer 1 of the video buffer 33 as a forward reference picture and with reference to the frame P15 stored in the buffer 2 as a backward reference picture and is then stored in the buffer 3. While the frame B13 is read out from the buffer 3 of the video buffer 33 and the output display processing thereof is carried out by the display output circuit 53, the next inputted frame B14 is decoded with reference to the frame I12 stored in the buffer 1 of the video buffer 33 as a forward reference picture and with reference to the frame P 15 stored in the buffer 2 as a backward reference picture and is then stored in the buffer 3. By the processing at the display output circuit 53, the frame B14 is read out from the buffer 3 of the video buffer 33 and is outputted and displayed.

The next inputted frame P 18 is decoded with reference to the frame P15 stored in the buffer 2 as a forward reference picture. After the decoding of the frame B14 ends, the frame I12 stored in the buffer 1 is not used as a reference picture and therefore the decoded frameP18 is stored in the buffer 1 of the video buffer 33. Then, at the timing when the frame P 18 is stored in the buffer 1, the frame P 15 is read out from the buffer 2 and is outputted and displayed.

Similarly, the subsequent frames of the GOP 1 are sequentially decoded, then stored in the buffers 1 to 3, and sequentially read out and displayed.

When a leading frame I22 of the GOP2 is inputted, the frame I22, which is an I-picture, requires not reference picture for decoding and therefore decoded as it is and stored in the buffer 2. At this timing, a frame P1e of the GOP1 is read out, outputted and displayed.

A frame B20 and a frame B21, which are subsequently inputted, are decoded with reference to the frame P1e in the buffer 1 as a forward reference picture and with reference to the frame I22 in the buffer 2 as a backward reference picture, then sequentially stored in the buffer 3, read out and displayed. In this manner, the B-picture at the leading end of the GOP is decoded with reference to the P-picture of the preceding GOP as a forward reference picture.

Similarly, the subsequent frames of the GOP2 are sequentially decoded, then stored in the buffers 1 to 3, and sequentially read out and displayed. Then, similarly, the frames of the GOP3 and the subsequent GOPs are sequentially decoded, then stored in the buffers 1 to 3, and sequentially read out and displayed.

In the above-described processing, the MPEG video decoder 122 carries out the decoding processing with reference to the quantization ID.

The case of carrying out reverse reproduction in the reproducing device described with reference to Fig.20 will now be described.

In the conventional reverse reproduction, since only an I-picture is taken out and decoded; only an unnatural reproduction picture can be obtained in which only one frame of the 15 frames is displayed.

On the other hand, the reproducing circuit 121 of Fig.20 can generate a reproduced stream while changing the order of the frames of the GOP inputted to the stream buffer 61 on the basis of the start code recorded in the start code buffer 62, and the MPEG video decoder 122 can decode all the 15 frames.

However, for reverse reproduction, it is not enough that the reproducing circuit 121 generates a reproduced stream while simply reversing the order of the frames of the GOP inputted to the stream buffer 61 on the basis of the start code recorded in the start code buffer 62.

For example, in the case of carrying out reverse reproduction of the GOP2 and the GOP 1 of the MPEG coded stream described with reference to Fig.22, the first frame to be outputted and displayed must be a frame P2e. The decoding of the frame P2e requires reference to a frame P2b as a forward reference picture, and the decoding of the frame P2b requires reference to a frame P28 as a forward reference picture. Since the decoding of the frame P28, too, requires a forward reference picture, all the I-picture and P-pictures of the GOP2 must be decoded to decode, output and display the frame P2e.

In order to decode the frame P2e to be displayed first in reverse reproduction; another method may also be considered in which the entire GOP2 is decoded and stored in the video buffer 33 and then sequentially read out from the last frame. In such a case, however, the video buffer 33 needs a buffer area for one GOP (15 frames).

Moreover, with this method, though it is possible to decode and reproduce the frames from the frame P2e to the frame I22, the decoding of the first two frames of the GOP2, that is, the frame B21 and the frame B20 to be displayed lastly in reverse reproduction, requires the frame P1e of the GOP 1 as a forward reference picture. To decode the frame P1e of the GOP1, all the I-picture and P-pictures of the GOP 1 are necessary.

That is, with this method, reverse reproduction of all the frames of one GOP cannot be carried out while the video buffer 33 requires a buffer area for 15 frames.

In the case where coding is carried out with M=15 and N=3 as described above with reference to Fig.22, one GOP contains a total of five frames of I-picture(s) and P-picture(s).

Thus, by enabling the stream buffer 61 to store frames of at least two GOPs and by enabling determination of the order of the frames of the reproduced stream generated by the reproducing circuit 121 on the basis of the decoding order for reverse reproduction by the MPEG video decoder 122 and storage of the frames of at least the number expressed by "total number of I-picture(s) and P-picture(s) included one GOP + 2" to the video buffer 33, all the frames including the frames over GOPs can be reproduced continuously in the reverse direction

Referring to Fig.24, the decoding processing in the case of reverse reproduction of the picture data of GOP1 to GOP3 from the hard disk 112 will now be described. Fig.24 shows an exemplary operation of the MPEG reverse reproduction decoder. The controller 34 controls the servo circuit 111 to first output an MPEG coded stream of the GOP3 and then output an MPEG coded stream of the GOP2 from the hard disk 112 to the reproducing circuit 121. The reproducing circuit 121 stores the MPEG coded stream of the GOP3 and then stores the MPEG coded stream of the GOP2 to the stream buffer 61

The reproducing circuit 121 reads out a leading frame I32 of the GOP3 from the stream buffer 61 and outputs the leading frame I32 as the first frame of the reproduced stream to the MPEG video decoder 122. Since the frame I32 is an I-picture and requires no reference pictures for decoding, the frame I32 is decoded by the MPEG video decoder 122 and stored in the video buffer 33. The area the video buffer 33 in which the decoded frame I32 is stored is referred to as buffer 1.

The data of the respective frames are decoded on the basis of the parameters described in the header and extension data described with reference to Fig.2. As described above, the parameters are decoded by the picture decoder 45 of the MPEG video decoder 122, then supplied to the slice decoder control circuit 46, and used for the decoding processing. In the case of decoding the GOP1, decoding is carried out by using the parameters of the upper layers described in sequence_header, sequence_extension, and GOP_header ofthe GOP 1 (for example, the above-described quantization matrix). In the case of decoding the GOP2, decoding is carried out by using the parameters of the upper layers described in sequence_header, sequence_extension, and GOP_header of the GOP2. In the case of decoding the GOP3; decoding is carried out by using the parameters of the upper layers described in sequence_header, sequence_extension, and GOP_header of the GOP3.

In reverse reproduction, however, since decoding is not carried out for each GOP, the MPEG video decoder 122 supplies the upper layer parameters to the controller 34 when the I-picture is decoded first in the respective GOPs. The controller 34 holds the supplied upper layer parameters in its internal memory, not shown.

The controller 34 monitors the decoding processing carried out by the MPEG video decoder 122, then reads out the upper layer parameter corresponding to the frame which is being processed, from the internal memory, and supplies the upper layer parameter to the MPEG video decoder 122 so as to realize appropriate decoding processing.

In Fig.24; the numbers provided above the frame numbers of the reproduced stream are quantization ID. Each frame of the reproduced stream is decoded on the basis of the quantization ID, similarly to the forward decoding described with reference to Fig.23

In the present embodiment, the controller 34 has an internal memory to hold the upper layer coding parameters. However, a memory connected with the controller 34 may also be provided so that the controller 34 can hold the upper layer coding parameters in the external memory without having an internal memory and can read out and supply the upper layer coding parameters to the MPEG video decoder 122, if necessary.

A memory for holding the upper layer coding parameters of GOPs may also be provided in the MPEG video decoder 122. Moreover, if the coding conditions such as the upper layer coding parameters are known, the coding conditions may be set in advance in the MPEG video decoder 122. Alternatively, if it is known that the upper layer coding parameters do not vary among GOPs, the coding parameters may be set in the MPEG video decoder 122 only once at the start of the operation, instead of reading the upper layer coding parameters for each GOP and setting the parameter in the MPEG video decoder 122 for each frame by the controller 34.

The reproducing circuit 121 reads out a frame P35 from the stream buffer 61 and outputs the frame P35 as the next frame of the reproduced stream to the MPEG video decoder 122. The frame P35 is decoded by the MPEG video decoder 122 with reference to the frame 132 recorded in the buffer 1 as a forward reference picture and is then stored in the video buffer 33. The area in the video buffer 33 in which the decoded frame P35 is stored is referred to as buffer 2.

The reproducing circuit 121 sequentially reads out a frame P38, a frame P3b and a frame P3e from the stream buffer 61 and outputs these frames as a reproduced stream. Each of these P-pictures is decoded by the MPEG video decoder 122 with reference to the preceding decoded P-picture as a forward reference picture and is then stored in the video buffer 33. The areas in the video buffer 33 in which these decoded P-picture frames are stored are referred to as buffers 3 to 5.

At this point, all the I-picture and P-pictures of the GOP3 have been decoded and stored in the video buffer 33.

Subsequently, the reproducing circuit 121 reads out a frame I22 of the GOP2 from the stream buffer 61 and outputs the frame I22 as a reproduced stream. The frame I22, which is an I-picture, is decoded by the MPEG video decoder 122 without requiring any reference picture and is then stored in the video buffer 33. The area in which the decoded frame 122 is stored is referred to as buffer 6. At the timing when the frame 122 is stored in the buffer 6, the frame P3e of the GOP3 is read out from the buffer 5, then outputted and displayed as the first picture of reverse reproduction.

The reproducing circuit 121 reads out a frame B3d of the GOP3 from the stream buffer 61, that is, the frame to be reproduced in the reverse direction, of the B-pictures of the GOP3, and outputs the frame B3d as a reproduced stream. The frame B3d is decoded by the MPEG video decoder 122 with reference to the frame P3b in the buffer 4 as a forward reference picture and with reference to the frame P3e in the buffer 5 as a backward reference picture and is then stored in the video buffer 33. The area in which the decoded frame B3d is stored is referred to as buffer 7.

After frame/field conversion and matching to the output video synchronous timing are carried out, the frame B3d stored in the buffer 7 is outputted and displayed At the same timing as the display of the frame B3d, the reproducing circuit 121 reads out a frame B3c of the GOP3 from the stream buffer 61 and outputs the frame B3c to the MPEG video decoder 122. Similarly to the frame B3d, the frame B3c is decoded by the MPEG video decoder 122 with reference to with reference to the frame P3b in the buffer 4 as a forward reference picture and with reference to the frame P3e in the buffer 5 as a backward reference picture

The frame B3d, which is previously decoded and outputted, is a B-picture and therefore is not referred to for the decoding of another frame. Therefore, the decoded frame P3c is stored in place of the frame B3d in the buffer 7 (that is, rewritten in the buffer 7). After frame/field conversion and matching to the output video synchronous timing are carried out, the frame P3c is outputted and displayed.

The reproducing circuit 121 reads out a frame P25 of the GOP2 from the stream buffer 61 and outputs the frame P25 to the MPEG video decoder 122. The frame P25 of the GOP2 is decoded by the MPEG video decoder 122 with reference to the frame I22 in the buffer 6 as a forward reference picture. Since the frame P3e stored in the buffer sis no longer used as a reference picture, the decoded frame P25 is stored in place of the frame P3e in the buffer 5. Then, at the same timing as the storage of the frame P25 into the buffer 5, the frame P3b in the buffer 4 is read out and displayed.

The reproducing circuit 121 reads out a frame B3a of the GOP3 from the stream buffer 61 and outputs the frame B3a as a reproduced stream. The frame B3a is decoded by the MPEG video decoder 122 with reference to the frame P38 in the buffer 3 as a forward reference picture and with reference to the frame P3b in the buffer 4 as a backward reference picture and is then stored in the buffer 7 of the video buffer 33

After frame/field conversion and matching to the output video synchronous timing are carried out, the frame B3a stored in the buffer 7 is outputted and displayed A the same timing as the display of the frame B3a, the reproducing circuit 121 reads out a frame B39 of the GOP3 from the stream buffer 61 and outputs the frame B39 to the MPEG video decoder 122. Similarly to the frame B3a, the frame B39 is decoded by the MPEG video decoder 122 with reference to the frame P39 in the buffer 3 as a forward reference picture and with reference to the frame P3b in the buffer 4 as a backward reference picture. The frame B39 is then stored in place of the frame B3a in the buffer 7. After frame/field conversion and matching to the output video synchronous timing are carried out, the frame B39 is outputted and displayed.

The reproducing circuit 121 reads out a frame P28 of the GOP2 from the stream buffer 61 and outputs the frame P28 to the MPEG video decoder 122. The frame P28 of the GOP2 is decoded by the MPEG video decoder 122 with reference to the frame P25 in the buffer 5 as a forward reference picture. Since the frame P3b stored in the buffer 4 is no longer used as a reference picture, the decoded frame P28 is stored in place of the frame P3b in the buffer 4. At the same tuning as the storage of the frame P28 into the buffer 4, the frame P38 in the buffer 3 is read out and displayed.

In this manner, at the timing when the I-picture or P-picture of the GOP2 is decoded and stored into the buffer 33, the I-picture or P-picture of the GOP3 is read out from the buffer 33 and displayed.

Similarly, as shown in Fig.24, the remaining B-pictures of the GOP3 and the remaining P-pictures of the GOP2 are decoded in the order of B37, B36, P2b, B34, B33 and P2e. The decoded B-pictures are stored in the buffer 7 and are sequentially read out and displayed. The decoded P-pictures of the GOP2 are sequentially stored in one of the buffers 1 to 6 in which a frame of completed reference was stored, and at that timing, the P-picture of the GOP3 already stored in one of the buffers 1 to 6 is read out and outputted between B-pictures so as to follow the order of reverse reproduction.

The reproducing circuit 121 reads out a frame B31 of the GOP3 and then reads out a frame B30 from the stream buffer 61, and outputs these frames to the MPEG video decoder 122. Since the frame P2e as a forward reference picture and the frame I32 as a backward reference picture which are necessary for decoding the frame B31 and the frame B30 are stored in the buffer 2 and the buffer 1, respectively, the first two frames of the GOP3, that is, the last frames to be displayed in reverse reproduction, too, can be decoded by the MPEG video decoder 122.

The decoded frame B31 and frame B30 are sequentially stored into the buffer 7. After frame/field conversion and matching to the output video synchronous timing are carried out, the frame B31 and the frame B30 are outputted and displayed.

After all the frames of the GOP3 are read out from the stream buffer 61, the controller 34 controls the servo circuit 111 to read out and supply the GOP 1 from the hard disk 112 to the reproducing circuit 121. The reproducing circuit 121 carries out predetermined processing to extract and record the start code ofthe GOP 1. to the start code buffer 62. The reproducing circuit 121 also supplies and stores the coded stream of the GOP 1 to the stream buffer 61.

Then, the reproducing circuit 121 reads out a frame I12 of the GOP 1 from the stream buffer 61 and outputs the frame I12 as a reproduced stream to the MPEG video decoder 122. The frame I12 is an I-picture and therefore it is decoded by the MPEG video decoder 122 without referring to any other picture. The frame I12 is outputted to the buffer 1 and stored in place of the frame I32 in the buffer 1, which is no longer used as a reference picture in the subsequent processing. At this point, the frame P2e is read out and outputted from the buffer 2 and the reverse reproduction display of the GOP2 is started.

The reproducing circuit 121 then reads out a frame B2d of the. GOP2, that is, the first frame to be reproduced in reverse reproduction of the B-pictures of the GOP2, from the stream buffer 61, and outputs the frame B2d as a reproduced stream. The frame B2d is decoded by the MPEG video decoder 122 with reference to the frame P2b in the buffer 3 as a forward reference picture and with reference to the frame P2e in the buffer 2 as a backward reference picture and is then stored in the video buffer 33. The decoded frame B2d is stored in the buffer 7. After frame/field conversion and matching to the output video synchronous timing are carried out, the frame B2d is outputted and displayed.

Similarly, the remaining B-pictures of the GOP2 and the remaining P-pictures of the GOP 1 are decoded in the order of B2c, P15, B2a, B29, P18, B27, B26, P1b, B24, B23, P1e, P21 and P20. These pictures are sequentially stored in one of the buffers 1 to 7 in which a frame of completed reference was stored, and are read out and outputted in the order of reverse reproduction. Finally, the remaining B-pictures of the GOP 1 are decoded and sequentially stored into the buffer 7, and are read out and outputted in the order of reverse reproduction, though not shown.

In the processing described with reference to Fig.24, reverse reproduction is carried out at the same speed as normal reproduction. However, if the reproducing circuit 121 outputs the reproduced stream to the MPEG video decoder 122 at a speed which is 1/3 of the speed of the normal reproduction and the MPEG video decoder 122 carries out the decoding processing of only one frame in a processing time which is normally for three frames and causes the display unit or display device, not shown, to display the same frame in a display time which is normally for three frames, forward reproduction and reverse reproduction at a 1/3-tuple speed are made possible by the similar processing.

Moreover, if the display output circuit 53 repeatedly outputs the same frame, so-called still reproduction is made possible. By changing the data output rate from the reproducing circuit 121 to the MPEG video decoder 122 and the processing speed of the MPEG video decoder 122, forward reproduction and reverse reproduction at a 1/n-tuple speed (where n is an arbitrary number) are made possible by the similar processing.

That is, in the reproducing device according to the present invention, smooth trick reproduction is possible at an arbitrary speed in reverse reproduction at a nonnal speed, reverse reproduction at a 1/n-tuple speed, still reproduction, forward reproduction at a 1/n-tuple speed, and forward reproduction at a normal speed.

Since the MPEG video decoder 122 is a decoder conformable to MPEG2 4:2:2P@HL, it has the ability to decode an MPEG2 MP@ML coded stream at a sextuple speed. Therefore, if the reproducing circuit 121 outputs a reproduced stream generated from an MPEG2 MP@ML coded stream to the MPEG video decoder 122 at a speed which is six times the speed of normal reproduction, forward reproduction and reverse reproduction at a sextuple speed is made possible by the similar processing by causing the display unit or display device, not shown, to display the extracted six frames each.

That is, in the reproducing device according to the present invention, smooth trick reproduction of an MPEG2 MP@ML coded stream is possible at an arbitrary speed in reverse reproduction at a sextuple speed, reverse reproduction at a normal speed, reverse reproduction at a 1/n-tuple speed, still reproduction, forward reproduction at a 1/n-tuple speed, forward reproduction at a normal speed, and forward reproduction at a sextuple speed.

If the MPEG video decoder 122 has the ability to decode at an N-tuple speed, smooth trick reproduction is possible at an arbitrary speed in reverse reproduction at an N-tuple speed, reverse reproduction at a normal speed, reverse reproduction at a 1/n-tuple speed, still reproduction, forward reproduction at a 1/n-tuple speed, forward reproduction at a normal speed, and forward reproduction at an N-tuple speed in the reproducing device according to the present invention.

Thus, for example, in verification of video signals; the contents of a video materials can be easily verified. In improving the efficiency of the video material verification work and in the video signal editing work, an editing point can be retrieved suitably and the efficiency of the editing work can be improved.

The above-described series of processing can be executed by software. A program constituting such software is installed from a recording medium to a computer incorporated in the dedicated hardware or to a general-purpose personal computer which can carry out various functions by installing various programs.

This recording medium is constituted by a package medium which is distributed to provide the program to the user separately from the computer and on which the program is recorded, such as the magnetic disk 101 (including a floppy disk), the optical disc 102 (including CD-ROM (compact disc read-only memory) and DVD (digital versatile disk)), the magneto-optical disc 103 (including MD (mini disc)), or the semiconductor memory 104, as shown in Fig.15 or Fig.20.

In this specification, the steps describing the program recorded on the recording medium include not only the processing which is carried out in time series in the described order but also the processing which is not necessarily carried out in time series but is carried out in parallel or individually.

According to the first decoding device, decoding method and program of the present invention, a coded stream is decoded and the decoding processing is carried out in parallel. Therefore, a video decoder can be realized which is conformable to 4:2:2P@HL and is capable of carrying out real-time operation on a practical circuit scale

According to the second decoding device, decoding method and program of the present invention, a coded stream is decoded by a plurality of slice decoders and the decoding processing is carried out in parallel by the plurality of slice decoders. Therefore, a video decoder can be realized which is conformable to 4:2:2P@HL and is capable of carrying out real-time operation on a practical circuit scale.

According to the third decoding device, decoding method and program of the present invention, a source coded stream is decoded for each slice constituting a picture of the source coded stream, and the decoding statuses of a plurality of slice decoders are monitored while the plurality of slice decoders are controlled, thus allocating the slices to the plurality of slice decoders so as to realize the fastest decoding processing carried out by the slice decoders irrespective of the order of the slices included in the picture. Therefore, a video decoder can be realized which is conformable to 4:2:2P@HL and is capable of carrying out real-time operation on a practical circuit scale.

According to the fourth decoding device, decoding method and program of the present invention, a source coded stream is decoded for each slice constituting a picture of the source coded stream, and the decoding statuses of a plurality of slice decoders are monitored while the plurality of slice decoders are controlled, thus allocating the slice to be decoded to the slice decoder which ended decoding, of a plurality of slice decoders, irrespective of the order of the slice included in the picture. Therefore, a video decoder can be realized which is conformable to 4:2:2P@HL and is capable of carrying out real-time operation on a practical circuit scale

## Claims

1. A decoding device (31) for decoding a coded stream comprising a plurality of information units, the device comprising:
a plurality of decoding means (47, 48, 49), each being operable to decode a predetermined information unit of the coded stream; and
decoding control means (46) for controlling the plurality of decoding means to operate in parallel, wherein each of the plurality of decoding means is operable to output a signal indicating the end of decoding processing of the predetermined information unit to the decoding control means, and
the decoding control means is operable to provide, in response to the signal, a further predetermined information unit of the coded stream to the decoded means which outputted the signal indicating the end of decoding processing.

2. The decoding device as claimed in claim 1, further comprising:
first buffer means (61)for buffering the coded stream;
reading means (42) for reading out a start code indicating the start of a predetermined information unit included in the coded stream from the coded stream and reading out position information related to the position where the start code is held to the first buffer means;
second buffer means (62) for buffering the start code and the position information read out by the reading means; and
buffering control means (43) for controlling the buffering of the coded stream by the first buffer means and the buffering of the start code and the position information by the second buffer means.

3. The decoding device as claimed in claim 1, wherein the coded stream is an MPEG2 coded stream prescribed by the ISO/IEC 13818-2 and the ITU-T Recommendations H.262.

4. The decoding device as claimed in claim 1, further comprising:
selecting means for selecting predetermined picture data of a plurality of picture data decoded and outputted by the plurality of decoding means; and
motion compensation means (50) for receiving the picture data selected by the selecting means and performing motion compensation, if necessary.

5. The decoding device as claimed in claim 4, wherein the decoding means outputs an end signal indicating that decoding processing has ended to the selecting means, and
wherein the selecting means has storage means for storing values corresponding to the respective processing statuses of the plurality of decoding means,
changes, from a first value to a second value, the values stored in the storage means corresponding to the decoding means outputting the end signal indicating that decoding processing has ended, when all the values in the storage means are the first value,
selects one of the picture data decoded by the decoding means for which the corresponding values stored in the storage means are the second value, and
changes the value stored in the storage means corresponding to the decoding means which decoded the selected picture data, to the first value.

6. The decoding device as claimed in claim 4, further comprising:
holding means (33) for holding the picture data selected by the selecting means or the picture data on which motion compensation is performed by the motion compensation means; and
holding control means (51, 52) for controlling the holding, by the holding means, of the picture data selected by the selecting means or the picture data on which motion compensation is performed by the motion compensation means.

7. The decoding device as claimed in claim 6, wherein the holding means separately holds a luminance component and color-difference components of the picture data.

8. The decoding device as claimed in claim 6, further comprising change means for changing the order of frames of the coded stream supplied to the decoding means,
wherein the holding means can hold at least two more frames than the number of frames obtained by totaling intra-coded frames and forward predictive coded frames within a picture sequence, and
the change means can change the order of frames of the coded stream so as to make a predetermined order for reverse reproduction of the coded stream.

9. The decoding device as claimed in claim 8, further comprising output.means for reading out and outputting the picture data held by the holding means,
wherein the predetermined order is an order of intra-coded frame, forward predictive coded frame, and bidirectional predictive coded frame, and the order within the bidirectional predictive coded frame is the reverse of the coding order, and
the output means sequentially reads out and outputs the bidirectional predictive coded frames decoded by the decoding means and held by the holding means, and reads out the intra-coded frame or the forward predictive coded frame held by the holding means, at predetermined timing, and inserts and outputs the intra-coded frame or the forward predictive coded frame at a predetermined position between the bidirectional predictive coded frames.

10. The decoding device as claimed in claim 9, wherein the predetermined order is such an order that an intra-coded frame or a forward predictive coded frame of the previous picture sequence decoded by the decoding means is held by the holding means at the timing when the intra-coded frame or the forward predictive coded frame is outputted by the output means

11. The decoding device as claimed in claim 8, further comprising:
recording means (35) for recording necessary information for decoding the coded stream; and
control means (34) for controlling the recording of the information by the recording means and the supply of the information to the decoding means;
wherein the coded stream includes the information, and
the control means selects the necessary information for decoding processing by the decoding means and supplies the necessary information to the decoding means.

12. The decoding device as claimed in claim 11, wherein the information supplied to the decoding means by the control means is an upper layer coding parameter corresponding to a frame decoded by the decoding means.

13. The decoding device as claimed in claim 6, further comprising output means for reading and outputting the picture data held by the holding means,
wherein the decoding means is capable of decoding the coded stream at a speed N times the processing speed necessary for normal reproduction, and
the output means is capable of outputting the picture data of N frames each, of the picture data held by the holding means.

14. The decoding device as claimed in claim 1, further comprising:
first holding means (41) for holding the coded stream;
reading means (42) for reading out a start code indicating the start of a predetermined information unit included in the coded stream from the coded stream and reading out position information related to the position where the start code is held to the first holding means;
second holding means (62) for holding the start code and the position information read out by the reading means;
first holding control means(43) for controlling the holding of the coded stream by the first holding means and the holding of the start code and the position information by the second holding means;
selecting means for selecting predetermined picture data of the plurality of picture data decoded and outputted by the plurality of decoding means;
motion compensation means (50) for receiving the input of the picture data selected by the selecting means and performing motion compensation if necessary;
third holding means (71, 72) for holding the picture data selected by the selecting means or the picture data on which motion compensation is performed by the motion compensation means; and
second holding control means (51, 52) for controlling the holding, by the third holding means, of the picture data selected by the selecting means or the picture data on which motion compensation is performed by the motion compensation means, independently of the first holding control means.

15. The decoding device as claimed in claim 1, wherein the plurality of decoding means comprise
a plurality of slice decoders for decoding the coded stream; and
the decoding control means comprise
slice decoder control means for controlling the plurality of slice decoders to operate in parallel.

16. The decoding device as claimed in claim 1, wherein the plurality of decoding means comprise
a plurality of slice decoders for decoding the source coded stream for each slice constituting a picture of the source coded stream; and
the decoding control means comprise
control means for monitoring the decoding statuses of the plurality of slice decoders and controlling the plurality of slice decoders;
wherein the control means allocates the slices to the plurality of slice decoders so as to realize the fastest decoding processing of the picture by the slice decoders irrespective of the order of the slices included in the picture:

17. A decoding device as claimed in claim 1, wherein the plurality of decoding means comprise
a plurality of slice decoders for decoding the source coded stream for each slice constituting a picture of the source coded stream; and
the decoding control means comprise
control means for monitoring the decoding statuses of the plurality of slice decoders and controlling the plurality of slice decoders;
wherein the control means allocates the slice to be decoded to the slice decoder which ended decoding, of the plurality of slice decoders; irrespective of the order off the slice included in the picture.

18. A decoding method for decoding a coded stream comprising a plurality of information units, the method comprising:
decoding a plurality of predetermined information units of the coded stream;
controlling the processing of the plurality of predetermined information units to be carried out in parallel by a corresponding plurality of parallel decoders;
outputting from each of said parallel decoders, a respective signal indicating the end of decoding processing of each respective predetermined information unit; and
providing, in response to each said respective signal, a further predetermined information unit of the coded stream for decoding by a corresponding one of said parallel decoders.

19. The decoding method as claimed in claim 18, wherein the step of decoding comprises
decoding control steps of controlling the decoding by a plurality of slice decoders for decoding the coded stream; and
the step of controlling comprises
a slice decoder control step of controlling the decoding control steps to be carried out in parallel.

20. The decoding method as claimed in claim 18, wherein the coded stream comprises a source coded stream,
the step of decoding comprises
a decoding processing control step of controlling the decoding processing of the source coded stream for each slice constituting a picture of the source coded stream by a plurality of slice decoders; and
the step of controlling comprises
a control step of monitoring the decoding statutes of the plurality of slice decoders and controlling the plurality of slice decoders;
wherein in the processing of the control step, the slices are allocated to the plurality of slice decoders so as to realize the fastest decoding processing carried out by the slice decoders irrespective of the order of the slices included in the picture.

21. The decoding method as claimed in claim 18, wherein the coded stream comprises a source coded stream,
the step of decoding comprises a decoding processing control step of controlling the decoding processing of the source coded stream for each slice constituting a picture of the source coded stream by a plurality of slice decoders; and
the step of controlling comprises a control step of monitoring the decoding statuses of the plurality of slice decoders and controlling the plurality of slice decoders;
wherein in the processing ofthe control step, the slice is allocated to be decoded to the slice decoder which ended the decoding processing by the processing of the decoding processing control step, of the plurality of slice decoders, irrespective of the order of the slice included in the picture.

22. A program which can be executed by a computer controlling a decoding device for decoding a coded stream, the program being operable to perform the method steps of any one of claims 18 to 21.

23. A recording medium having a computer-readable programrecordedthereon, the computer-readable program being adapted for a decoding device for decoding a coded stream, the computer-readable program comprising the program as claimed in claim 22.

## Patentansprüche

1. Decodiervorrichtung (31) zum Decodieren eines codierten Datenstroms mit mehreren Informationseinheiten, wobei die Vorrichtung umfasst:
mehrere Decodiereinrichtungen (47, 48, 49), die jeweils ausgebildet sind, eine vorbestimmte Informationseinheit des codierten Datenstromes zu decodieren; und
eine Decodiersteuereinrichtung (46) zum Steuern der mehreren Decodiereinrichtungen, um diese parallel zu betreiben, wobei jede der mehreren Decodiereinrichtungen ausgebildet ist, um ein Signal, das das Ende der Decodierverarbeitung in der vorbestimmten Informationseinheit angibt, an die Decodiersteuereinrichtung auszugeben, und wobei die Decodiersteuereinrichtung ausgebildet ist, um abhängig von dem Signal eine weitere vorbestimmte Informationseinheit des codierten Datenstroms der Decodiereinrichtung bereitzustellen, die das Signal, das das Ende der Decodierverarbeitung angibt, ausgegeben hat.

2. Decodiervorrichtung nach Anspruch 1, weiterhin umfassend:
eine erste Puffereinrichtung (61) zum Puffern des codierten Datenstroms;
eine Ausleseeinrichtung (42) zum Auslesen eines Startcodes, der den Start einer vorbestimmten Informationseinheit, die in dem codierten Datenstrom enthalten ist, angibt, aus dem codierten Datenstrom und zum Auslesen einer Positionsinformation mit Bezug auf die Position, an der der Startcode in der ersten Puffereinrichtung gespeichert ist;
eine zweite Puffereinrichtung (62) zum Puffern des Startcodes und der Positionsinformation, die durch die Ausleseeinrichtung ausgelesen werden; und
eine Puffersteuereinrichtung (43) zum Steuern des Pufferns des codierten Datenstroms durch die erste Puffereinrichtung und des Pufferns des Startcodes und der Positionsinformation durch die zweite Puffereinrichtung.

3. Decodiervorrichtung nach Anspruch 1, wobei der codierte Datenstrom einem MPEG2-codierter Datenstrom entspricht, der durch ISO/IEC 13818-2 und die ITU-T-Empfehlungen H.262 beschrieben ist.

4. Decodiervorrichtung nach Anspruch 1, weiterhin umfassend:
eine Auswahleinrichtung zum Auswählen von vorbestimmten Bilddaten aus mehreren decodierten und durch die mehreren Decodiereinrichtungen ausgegebenen Bilddaten; und
eine Bewegungskompensationseinrichtung (50) zum Empfangen der Bilddaten, die durch die Auswahleinrichtung ausgewählt sind, und zum Durchführen einer Bewegungskompensation, wenn erforderlich.

5. Decodiervorrichtung nach Anspruch 4, wobei die Decodiereinrichtung ein Endsignal an die Auswahleinrichtung ausgibt, das angibt, dass die Decodierverarbeitung beendet worden ist; und
wobei die Auswahleinrichtung eine Speichereinrichtung zum Speichern von Werten, die ihre jeweiligen Verarbeitungsstati der mehreren Decodiereinrichtungen entsprechen, aufweist,
die Werte, die in der Speichereinrichtung gespeichert sind, die der Decodiereinrichtung entspricht, die das Endsignal, das angibt, dass die Decodierverarbeitung beendet worden ist, ausgibt, von einem ersten zu einem zweiten Wert ändert, wenn alle Werte in der Speichereinrichtung dem ersten Wert entsprechen,
eines der Bilddaten auswählt, die durch die Decodiereinrichtung decodiert werden, für die die entsprechenden Werte, die in der Speichereinrichtung gespeichert sind, dem zweiten Wert entsprechen; und
den Wert, der in der Speichereinrichtung gespeichert ist, die der Decodiereinrichtung entspricht, die die ausgewählten Bilddaten decodiert hat, in den ersten Wert ändert.

6. Decodiervorrichtung nach Anspruch 4, weiterhin umfassend:
eine Speichereinrichtung (33) zum Speichern der Bilddaten, die von der Auswahleinrichtung ausgewählt sind, oder der Bilddaten, auf die eine Bewegungskompensation durch die Bewegungskompensationseinrichtung durchgeführt worden ist, und
eine Speichersteuereinrichtung (51, 52) zum Steuern des Speicherns der Bilddaten, die durch die Auswahleinrichtung ausgewählt sind, oder der Bilddaten, auf die die Bewegungskompensation durch die Bewegungskompensationseinrichtung durchgeführt wird, durch die Speichereinrichtung.

7. Decodiervorrichtung nach Anspruch 6, wobei die Speichereinrichtung separat eine Helligkeitskomponente und Farbdifferenzkomponenten der Bilddaten speichert.

8. Decodiervorrichtung nach Anspruch 6, die weiterhin eine Änderungseinrichtung umfasst, um die Reihenfolge der Rahmen des codierten Datenstroms, die der Decodiereinrichtung zugeführt werden, zu ändern, wobei die Speichereinrichtung mindestens zwei Rahmen mehr als die Anzahl von Rahmen, die durch die Summe der intra-codierten Rahmen und der vorwärts-prädiktiv codierten Rahmen innerhalb einer Bildsequenz erhalten wird, speichern kann, und
wobei die Änderungseinrichtung die Reihenfolge der Rahmen des codierten Datenstroms so ändern kann, dass eine vorbestimmte Reihenfolge für die umgekehrte Wiedergabe des codierten Datenstroms erstellt wird.

9. Decodiervorrichtung nach Anspruch 8, die weiterhin eine Ausgabeeinrichtung zum Auslesen und Ausgeben der Bilddaten, die durch die Speichereinrichtung gespeichert sind, umfasst,
wobei die vorbestimmte Reihenfolge einer Reihenfolge der intra-codierten Rahmen, des vorwärts prädiktiven codierten Rahmen und eines bidirektional prädiktiven codierten Rahmens entspricht und wobei die Reihenfolge innerhalb des bidirektional prädiktiv.codierten Rahmen der Umkehrung der Codierungsreihenfolge entspricht und
wobei die Ausgabeeinrichtung die bidirektional prädiktiv codierten Rahmen, die durch die Decodiereinrichtung decodiert sind und durch die Speichereinrichtung gespeichert sind, sequenziell ausliest und ausgibt, und die intra-codierten Rahmen oder die vorwärts prädiktiv codierten Rahmen, die durch die Speichereinrichtung gespeichert sind, zu einem vorbestimmten Zeitpunkt ausliest und die intra-codierten Rahmen oder die vorwärts prädiktiv codierten Rahmen an eine vorbestimmte Position zwischen den bidirektional prädiktiv codierten Rahmen einfügt und ausgibt.

10. Decodiervorrichtung nach Anspruch 9, wobei die vorbestimmte Reihenfolge einer Reihenfolge entspricht, in der ein intra-codierter Rahmen oder ein vorwärts prädiktiv codierter Rahmen der vorangehenden Bildsequenz, die durch die Decodiereinrichtung decodiert worden ist, durch die Speichereinrichtung zu einem Zeitpunkt gespeichert wird, wenn der intra-codierte Rahmen oder der vorwärts prädiktiv codierte Rahmen durch die Ausgabeeinrichtung ausgegeben wird.

11. Decodiervorrichtung nach Anspruch 8, weiterhin umfassend:
eine Aufzeichnungseinrichtung (35) zum Aufzeichnen einer notwendigen Information zum Decodieren des codierten Datenstroms; und
eine Steuereinrichtung (34) zum Steuern des Aufzeichnens der Information durch die Aufzeichnungseinrichtung und das Bereitstellen der Information an die Decodiereinrichtung;
wobei der codierte Datenstrom die Information umfasst, und
wobei die Steuereinrichtung die notwendige Information zum Decodieren durch die Decodiereinrichtung auswählt und die notwendige Information der Decodiereinrichtung bereitstellt.

12. Decodiervorrichtung nach Anspruch 11, wobei die an die Decodiereinrichtung durch die Steuereinrichtung bereitgestellte Information einem Codierparameter der oberen Schicht entspricht, der einem durch die Decodiereinrichtung decodierten Rahmen entspricht.

13. Decodiervorrichtung nach Anspruch 6, weiterhin umfassend
eine Ausgabeeinrichtung zum Auslesen und Ausgeben der Bilddaten, die durch die Speichereinrichtung gespeichert werden,
wobei die Decodiereinrichtung in der Lage ist, den codierten Datenstrom mit einer N-fachen Geschwindigkeit der Verarbeitungsgeschwindigkeit, die für die normale Wiedergabe notwendig ist, zu decodieren, und
die Ausgabeeinrichtung in der Lage ist, die Bilddaten von jeweils N Rahmen der durch die Speichereinrichtung gespeicherten Bilddaten auszugeben.

14. Decodiervorrichtung nach Anspruch 1, weiterhin umfassend:
eine erste Speichereinrichtung (41) zum Speichern des codierten Datenstroms;
eine Ausleseeinrichtung (42) zum Auslesen eines Startcodes, der den Start einer vorbestimmten Informationseinheit angibt, die in dem codierten Datenstrom enthalten ist, aus dem codierten Datenstrom und zum Auslesen einer Positionsinformation, die sich auf die Position bezieht, bei der der Startcode in der ersten Speichereinrichtung gespeichert ist;
eine zweite Speichereinrichtung (62) zum Speichern des Startcodes und der Positionsinformation, die durch die Ausleseeinrichtung ausgelesen werden;
eine erste Speichersteuereinrichtung (43) zum Steuern des Speicherns des codierten Datenstroms durch die erste Speichereinrichtung und des Speicherns des Startcodes und der Positionsinformation durch die zweite Speichereinrichtung;
eine Auswahleinrichtung zum Auswählen von vorbestimmten Bilddaten der mehreren Bilddaten, die durch die mehreren Decodiereinrichtungen decodiert und ausgegeben werden;
eine Bewegungskompensationseinrichtung (50) zum Empfangen der Bilddaten, die durch die Auswahleinrichtung ausgewählt werden und zum Durchführen der Bewegungskompensation sofern notwendig;
eine dritte Speichereinrichtung (71, 72) zum Speichern der Bilddaten, die durch die Auswahleinrichtung ausgewählt sind, oder der Bilddaten, auf die eine Bewegungskompensation durch die Bewegungskompensationseinrichtung durchgeführt wird; und
eine zweite Speichersteuereinrichtung (51, 52) zum Steuern des Speicherns von Bilddaten, die durch die Auswahleinrichtung ausgewählt sind, oder der Bilddaten, auf die die Bewegungskompensation durch die Bewegungskompensationseinrichtung durchgeführt wird, durch die dritte Speichereinrichtung unabhängig von der ersten Speichersteuereinrichtung.

15. Decodiervorrichtung nach Anspruch 1, wobei die mehreren Decodiereinrichtungen mehrere Teile-Decodierer zum Decodieren des codierten Datenstroms umfassen; und wobei die Decodiersteuereinrichtung eine Teile-Decodierersteuereinrichtung umfasst, um die mehreren Teile-Decodierer so anzusteuern, dass diese parallel arbeiten.

16. Decodiervorrichtung nach Anspruch 1, wobei die mehreren Decodiereinrichtungen mehrere Teile-Decodierer zum Decodieren des quellencodierten Datenstroms für jeden Teil, der ein Bild des quellencodierten Datenstroms besteht, umfassen; und
wobei die Decodiersteuereinrichtung eine Steuereinrichtung zum Überwachen der Decodierstati der mehreren Teile-Decodierer und zum Steuern der mehreren Teile-Decodierer umfasst;
wobei die Steuereinrichtung die Teile der mehreren Teilede-Dodierer so alloziiert, um die schnellste Decodierung des Bildes durch die Teile-Decodierer ungeachtet der Reihenfolge der Teile, die in dem Bild enthalten sind, zu realisieren.

17. Decodiervorrichtung nach Anspruch 1, wobei die mehreren Decodiereinrichtungen umfassen:
mehrere Teile-Decodierer zum Decodieren des quellencodierten Datenstroms für jeden Teil, der aus einem Bild des quellencodierten Datenstroms besteht; und
wobei die Decodiersteuereinrichtung umfasst:
eine Steuereinrichtung zum Überwachen der Decodierstati der mehreren Teile-Decodierer und zum Steuern der mehreren Teile-Decodierer;
wobei die Steuereinrichtung den zu decodierenden Teil an den Teile-Decodierer alloziiert, der das Codieren der mehreren Teile-Decodierer beendet hat, ungeachtet der Reihenfolge der Teile, die in dem Bild enthalten sind.

18. Decodierverfahren zum Decodieren eines codierten Datenstroms mit mehreren Informationseinheiten, wobei das Verfahren folgende Schritte umfasst:
Decodieren von mehreren vorbestimmten Informationseinheiten des codierten Datenstroms;
Steuern der Verarbeitung der mehreren vorbestimmten Informationseinheiten, die parallel ausgeführt werden sollen, durch entsprechende mehrere parallele Decodierer;
Ausgeben eines jeweiligen Signals, das das Ende des Decodierens von jeder jeweiligen vorbestimmten Informationseinheit angibt, von jedem der parallelen Decodierer; und
Bereitstellen einer weiter vorbestimmten Informationseinheit des codierten Datenstroms zum Decodieren durch einen entsprechenden der parallelen Decodierer abhängig von jedem entsprechenden Signal.

19. Decodierverfahren nach Anspruch 18, wobei der Schritt des Decodierens umfasst:
Steuerschritte zum Steuern des Decodierens durch mehrere Teile-Decodierer zum Decodieren des codierten Datenstroms; und
wobei der Schritt des Steuerns umfasst:
einen Teile-Decodiersteuerschritt zum Steuern der Decodiersteuerschritte, die parallel ausgeführt werden sollen.

20. Decodierverfahren nach Anspruch 18, wobei der codierte Datenstrom einen quellencodierten Datenstrom umfasst, wobei der Schritt des Decodierens umfasst:
einen Decodierverarbeitungssteuerschritt zum Steuern des Decodierens des quellencodierten Datenstroms für jeden Teil, der aus einem Bild des quellencodierten Datenstroms besteht, durch mehrere Teiledecodierer; und
wobei der Schritt des Steuerns umfasst:
einen Steuerschritt zum Überwachen der Decodierstati der mehreren Teiledecodierer und zum Steuern der mehreren Teiledecodierer;
wobei bei der Verarbeitung des Steuerschritts die Teile den mehreren Teile-Decodierern so alloziiert werden, so dass das schnellste Decodieren realisiert wird, das durch die Teile-Decodierer ausgeführt wird, ungeachtet der Reihenfolge der Teile, die in dem Bild enthalten sind.

21. Decodierverfahren nach Anspruch 18, wobei der codierte Datenstrom einen quellencodierten Datenstrom umfasst, wobei der Schritt des Decodierens einem Decodierverarbeitungssteuerschritt des Steuerns des Decodierens des quellencodierten Datenstroms für jeden Teil, der auf einem Bild des quellencodierten Datenstroms besteht, durch mehrere Teiledecodierer umfasst; und
wobei der Schritt des Steuerns einen Steuerschritt des Überwachens der Decodierstati der mehreren Teile-Decodierer und des Steuerns der mehreren Teile-Decodierer umfasst;
wobei bei der Verarbeitung des Steuerschritts der Teil zum Decodieren an den Teile-Decodierer, der das Decodieren beendet hat, durch die Verarbeitung des Decodierverarbeitungssteuerschritts der mehreren Teiledecodierer ungeachtet der Reihenfolge der Teile, die in dem Bild enthalten sind, alloziiert wird.

22. Programm, das von einem Computer ausgeführt werden kann, das eine Decodiervorrichtung zum Decodieren eines codierten Datenstroms steuert, wobei das Programm ausgebildet ist, die Verfahrensschritte eines der Ansprüche 18 bis 20 auszuführen.

23. Aufzeichnungsmedium mit einem darauf aufgezeichneten computerlesbaren Programm, wobei das computerlesbare Programm für eine Decodiervorrichtung zum Decodieren eines codierten Datenstroms ausgebildet ist, wobei das computerlesbare Programm das Programm nach Anspruch 22 umfasst.

## Revendications

1. Dispositif de décodage (31) pour décoder un train codé comprenant une pluralité d'unités d'information, le dispositif comprenant :
une pluralité de moyens de décodage (47, 48, 49), chacun pouvant être actionné pour décoder une unité d'information prédéterminée du train codé ; et
un moyen de commande de décodage (46) pour commander la pluralité de moyens de décodage pour qu'ils fonctionnent en parallèle, dans lequel chacun de la pluralité de moyens de décodage peut fonctionner pour émettre en sortie un signal qui indique la fin d'un traitement de décodage de l'unité d'information prédéterminée sur le moyen de commande de décodage ; et
le moyen de commande de décodage peut fonctionner pour appliquer, en réponse au signal, une autre unité d'information prédéterminée du train codé sur le moyen de décodage, lequel a émis en sortie le signal indiquant la fin du traitement de décodage.

2. Dispositif de décodage selon la revendication 1, comprenant en outre :
un premier moyen de tampon (61) pour tamponner le train codé ;
un moyen de lecture (42) pour lire un code de début qui indique le début d'une unité d'information prédéterminée incluse dans le train codé à partir du train codé et pour lire une information de position rapportée à la position au niveau de laquelle le code de début est contenu dans le premier moyen de tampon ;
un second moyen de tampon (62) pour tamponner le code de début et l'information de position lus par le moyen de lecture ; et
un moyen de commande de tamponnage (43) pour commander le tamponnage du train codé au moyen du premier moyen de tampon et le tamponnage du code de début et de l'information de position au moyen du second moyen de tampon.

3. Dispositif de décodage selon la revendication 1, dans lequel le train codé est un train codé MPEG2 prescrit par l'ISO/IEC 13818-2 et les recommandations ITU-T H.262.

4. Dispositif de décodage selon la revendication 1, comprenant en outre :
un moyen de sélection pour sélectionner des données d'image prédéterminées d'une pluralité de données d'image décodées et émises en sortie par la pluralité de moyens de décodage ; et
un moyen de compensation de déplacement (50) pour recevoir les données d'image sélectionnées par le moyen de sélection et pour réaliser une compensation de déplacement, si nécessaire.

5. Dispositif de décodage selon la revendication 4, dans lequel :
le moyen de décodage émet en sortie un signal de fin indiquant qu'un traitement de décodage a été terminé sur le moyen de sélection ; et dans lequel
le moyen de sélection comporte un moyen de stockage pour stocker les valeurs correspondant aux états de traitement respectifs de la pluralité de moyens de décodage, il fait passer depuis une première valeur à une seconde valeur les valeurs qui sont stockées dans le moyen de stockage en correspondance avec le moyen de décodage qui émet en sortie le signal de fin indiquant qu'un traitement de décodage a été terminé, lorsque toutes les valeurs dans le moyen de stockage sont la première valeur, il sélectionne celle des données d'image décodées par le moyen de décodage pour laquelle les valeurs correspondantes stockées dans le moyen de stockage sont la seconde valeur et il fait passer la valeur stockée dans le moyen de stockage correspondant au moyen de décodage qui a décodé les données d'image sélectionnées à la première valeur.

6. Dispositif de décodage selon la revendication 4, comprenant en outre :
un moyen de blocage (33) pour bloquer les données d'image sélectionnées par le moyen de sélection ou les données d'image sur lesquelles une compensation de déplacement est réalisée par le moyen de compensation de déplacement ; et
un moyen de commande de blocage (51, 52) pour commander le blocage, par le moyen de blocage, des données d'image sélectionnées par le moyen de sélection ou des données d'image sur lesquelles une compensation de déplacement est réalisée par le moyen de compensation de déplacement.

7. Dispositif de décodage selon la revendication 6, dans lequel le moyen de blocage bloque de façon séparée une composante de luminance et des composantes de différence de couleur des données d'image.

8. Dispositif de décodage selon la revendication 6, comprenant en outre :
un moyen de modification pour modifier l'ordre des trames du train codé appliqué sur le moyen de décodage, dans lequel
le moyen de blocage peut bloquer au moins deux trames en plus que le nombre de trames obtenu en totalisant des trames intracodées et des trames codées par prédiction en sens direct à l'intérieur d'une séquence d'images ; et
le moyen de modification peut modifier l'ordre des trames du train codé de manière à réaliser un ordre prédéterminé pour une reproduction inverse du train codé.

9. Dispositif de décodage selon la revendication 8, comprenant en outre :
un moyen de sortie pour lire et émettre en sortie les données d'image bloquées par le moyen de blocage, dans lequel
l'ordre prédéterminé est un ordre constitué par une trame intracodée, une trame codée par prédiction en sens direct et une trame codée par prédiction bidirectionnelle et l'ordre à l'intérieur de la trame codée par prédiction bidirectionnelle est l'inverse de l'ordre de codage et le moyen de sortie lit et émet en sortie de façon séquentielle les trames codées par prédiction bidirectionnelle qui sont décodées par le moyen de décodage et qui sont bloquées par le moyen de blocage et lit la trame intracodée ou la trame codée par prédiction en sens direct bloquée par le moyen de blocage selon un cadencement prédéterminé et insère et émet en sortie la trame intracodée ou la trame codée par prédiction en sens direct au niveau d'une position prédéterminée entre les trames codées par prédiction bidirectionnelle.

10. Dispositif de décodage selon la revendication 9, dans lequel l'ordre prédéterminé est tel qu'une trame intracodée ou une trame codée par prédiction en sens direct de la séquence d'images précédente décodée par le moyen de décodage est bloquée par le moyen de blocage selon le cadencement lorsque la trame intracodée ou la trame codée par prédiction en sens direct est émise en sortie par le moyen de sortie.

11. Dispositif de décodage selon la revendication 8, comprenant en outre :
un moyen d'enregistrement (35) pour enregistrer une information nécessaire pour décoder le train codé ; et
un moyen de commande (34) pour commander l'enregistrement de l'information par le moyen d'enregistrement et l'application de l'information sur le moyen de décodage, dans lequel
le train codé inclut l'information ; et
le moyen de commande sélectionne l'information nécessaire pour un traitement de décodage par le moyen de décodage et applique l'information nécessaire sur le moyen de décodage.

12. Dispositif de décodage selon la revendication 11, dans lequel l'information appliquée sur le moyen de décodage par le moyen de commande est un paramètre de codage de couche supérieure correspondant à une trame décodée par le moyen de décodage.

13. Dispositif de décodage selon la revendication 6, comprenant en outre un moyen de sortie pour lire et émettre en sortie les données d'image bloquées par le moyen de blocage, dans lequel le moyen de décodage permet de décoder le train codé à une vitesse qui vaut N fois la vitesse de traitement nécessaire pour une reproduction normale ; et le moyen de sortie permet d'émettre en sortie les données d'images de N trames chacune, prises parmi les données d'image bloquées par le moyen de blocage.

14. Dispositif de décodage selon la revendication 1, comprenant en outre :
un premier moyen de blocage (41) pour bloquer le train codé;
un moyen de lecture (42) pour lire un code de début indiquant le début d'une unité d'information prédéterminée incluse à partir du train codé et pour lire une information de position rapportée à la position au niveau de laquelle le code de début est bloqué par le premier moyen de blocage ;
un second moyen de blocage (62) pour bloquer le code de début et l'information de position lus par le moyen de lecture ;
un premier moyen de commande de blocage (43) pour commander le blocage du train codé par le premier moyen de blocage et le blocage du code de début et de l'information de position par le second moyen de blocage ;
un moyen de sélection pour sélectionner des données d'image prédéterminées de la pluralité de données d'image décodées et émises en sortie par la pluralité de moyens de décodage ;
un moyen de compensation de déplacement (50) pour recevoir l'entrée des données d'image sélectionnées par le moyen de sélection et pour réaliser une compensation de déplacement si nécessaire ;
un troisième moyen de blocage (71, 72) pour bloquer les données d'image sélectionnées par le moyen de sélection ou les données d'image sur lesquelles une compensation de déplacement est réalisée par le moyen de compensation de déplacement ; et
un second moyen de commande de blocage (51, 52) pour commander le blocage, par le troisième moyen de blocage, des données d'image sélectionnées par le moyen de sélection ou des données d'image sur lesquelles une compensation de déplacement est réalisée par le moyen de compensation de déplacement, indépendamment du premier moyen de commande de blocage.

15. Dispositif de décodage selon la revendication 1, dans lequel les moyens de la pluralité de moyens de décodage comprennent :
une pluralité de décodeurs de tranche pour décoder le train codé ; et
le moyen de commande de décodage comprend un moyen de commande de décodeur de tranche pour commander la pluralité de décodeurs de tranche de telle sorte qu'ils fonctionnent en parallèle.

16. Dispositif de décodage selon la revendication 1, dans lequel :
les moyens de la pluralité de moyens de décodage comprennent une pluralité de décodeurs de tranche pour décoder le train codé de source pour chaque tranche constituant une image du train codé de source ; et
le moyen de commande de décodage comprend un moyen de commande pour surveiller les états de décodage de la pluralité de décodeurs de tranche et pour commander la pluralité de décodeurs de tranche,
dans lequel le moyen de commande alloue les tranches à la pluralité de décodeurs de tranche de manière à réaliser le traitement de décodage le plus rapide de l'image au moyen des décodeurs de tranche indépendamment de l'ordre des tranches qui sont incluses dans l'image.

17. Dispositif de décodage selon la revendication 1, dans lequel :
les moyens de la pluralité de moyens de décodage comprennent une pluralité de décodeurs de tranche pour décoder le train codé de source pour chaque tranche constituant une image du train codé de source ; et
le moyen de commande de décodage comprend un moyen de commande pour surveiller les états de décodage de la pluralité de décodeurs de tranche et pour commander la pluralité de décodeurs de tranche,
dans lequel le moyen de commande alloue la tranche destinée à être décodée au décodeur de tranche qui a terminé un décodage, parmi la pluralité de décodeurs de tranche, indépendamment de l'ordre de la tranche incluse dans l'image.

18. Procédé de décodage pour décoder un train codé comprenant une pluralité d'unités d'information, le procédé comprenant :
le décodage d'une pluralité d'unités d'information prédéterminées du train codé;
la commande du traitement de la pluralité d'unités d'information prédéterminées de telle sorte qu'il soit mis en oeuvre en parallèle par l'un correspondant d'une pluralité de décodeurs parallèles ;
l'émission en sortie, depuis chacun desdits décodeurs parallèles, d'un signal respectif indiquant la fin d'un traitement de décodage de chaque unité d'information prédéterminée respective; et
la fourniture, en réponse audit chaque signal respectif, d'une autre unité d'information prédéterminée du train codé pour un décodage par l'un correspondant desdits décodeurs parallèles.

19. Procédé de décodage selon la revendication 18, dans lequel :
l'étape de décodage comprend des étapes de commande de décodage consistant à commander le décodage au moyen d'une pluralité de décodeurs de tranche pour décoder le train codé ; et
l'étape de commande comprend une étape de commande de décodeur de tranche consistant à commander les étapes de commande de décodage de telle sorte qu'elles soient mises en oeuvre en parallèle.

20. Procédé de décodage selon la revendication 18, dans lequel :
le train codé comprend un train codé de source, l'étape de décodage comprend une étape de commande de traitement de décodage consistant à commander le traitement de décodage du train codé de source pour chaque tranche constituant une image du train codé de source au moyen d'une pluralité de décodeurs de tranche; et
l'étape de commande comprend une étape de commande consistant à surveiller les états de décodage de la pluralité de décodeurs de tranche et à commander la pluralité de décodeurs de tranche,
dans lequel, lors du traitement de l'étape de commande, les tranches sont allouées à la pluralité de décodeurs de tranche de manière à réaliser le traitement de décodage le plus rapide mis en oeuvre par les décodeurs de tranche indépendamment de l'ordre des tranches qui sont incluses dans l'image.

21. Procédé de décodage selon la revendication 18, dans lequel :
le train codé comprend un train codé de source, l'étape de décodage comprend une étape de commande de traitement de décodage consistant à commander le traitement de décodage du train codé de source pour chaque tranche constituant une image du train codé de source au moyen d'une pluralité de décodeurs de tranche ; et
l'étape de commande comprend une étape de commande consistant à surveiller les états de décodage de la pluralité de décodeurs de tranche et à commander la pluralité de décodeurs de tranche,
dans lequel, au niveau du traitement de l'étape de commande, la tranche est allouée pour être décodée au décodeur de tranche qui a terminé le traitement de décodage au moyen du traitement de l'étape de commande de traitement de décodage, parmi la pluralité de décodeurs de tranche, indépendamment de l'ordre de la tranche qui est incluse dans l'image.

22. Programme qui peut être exécuté par un ordinateur qui commande un dispositif de décodage pour décoder un train codé, le programme pouvant fonctionner pour réaliser les étapes de procédé selon l'une quelconque des revendications 18 à 21.

23. Support d'enregistrement comportant un programme lisible par ordinateur enregistré dessus, le programme lisible ordinateur étant adapté pour un dispositif de décodage permettant de décoder un train codé, le programme lisible par ordinateur comprenant le programme selon la revendication 22.
